# EUROPÄISCHE PATENTSCHRIFT

(11) **EP 2 178 706 B1**
(45) Veröffentlichungstag und Bekanntmachung des Hinweises auf die Patenterteilung: **22.10.2014**
(21) Anmeldenummer: 08784649.9
(22) Anmeldetag: 30.06.2008
(51) Int. Cl.: B41M 7/00, B44C 1/17, B29C 45/14, B29C 49/02, B29C 49/24, B32B 33/00

(54) **VERFAHREN ZUR FIXIERUNG VON BILDERN IN KUNSTSTOFFEN, HAFTSCHICHT UND FIXIERTES BILD**
PROCESS FOR FIXING IMAGES IN PLASTICS, ADHESIVE LAYER AND FIXED IMAGE
PROCÉDÉ DE FIXATION D'IMAGES DANS DES MATIÈRES SYNTHÉTIQUES, COUCHE ADHÉSIVE ET IMAGES AINSI FIXÉES

(30) Priorität: 29.06.2007 DE 102007031121
(43) Veröffentlichungstag der Anmeldung: 28.04.2010
(73) Patentinhaber: Coyando GmbH, 10407 Berlin (DE)
(72) Erfinder: SCHÄFER, Konstanze, 10405 Berlin (DE)
(74) Vertreter: Gulde & Partner
(86) Internationale Anmeldenummer: PCT/EP2008/005557
(87) Internationale Veröffentlichungsnummer: WO 2009/003727

(56) Entgegenhaltungen:
- EP-A- 1 186 435
- EP-A- 1 317 347
- WO-A-01/43978
- DE-A1- 19 942 055
- GB-A- 1 487 969
- US-A- 4 490 410

## Beschreibung

Die Erfindung betrifft ein Verfahren zur Fixierung von Bildern in Kunststoffen.

Die Qualität von Druckverfahren, insbesondere des Digitaldruckes hat sich in den letzten Jahren drastisch verbessert. Es können hochwertige fotorealistische Bilder produziert werden und auch andere Darstellungen sind schnell und einfach realisierbar. Insbesondere der Digitaldruck wird in Zukunft herkömmliche industriell genutzte Drucktechniken immer weiter zurückdrängen und auch in diesen Bereichen enorm an Bedeutung gewinnen.

Eine bisher bestehende Schwierigkeit für den Gebrauch von Drucktechniken im industriellen Rahmen (z.B. Designindustrie, Telekommunikationsindustrie, Autobau, Schiffbau und Flugzeugbau, Verpackungsmittelindustrie, etc.) ist die direkte Übertragung eines Bildes auf eine Kunststoffoberfläche und dessen Fixierung. Dieses Problem kann mit heutigen Techniken mehr oder weniger gut gelöst werden, wobei derzeit kein Verfahren bekannt ist, das Bilder in Kunststoffen so fixiert, dass sie in größerem Umfang thermoplastisch verformbar oder sogar elastisch dehnbar sind. So gibt es auch derzeit kein bekanntes Verfahren, das Bilder mit einem befriedigenden Ergebnis in elastischen Kunststoffpolymeren fixieren kann.

Ebenfalls nicht bekannt sind Verfahren, in denen die Information eines Bildes auf mehrere Ebenen des Kunststoffs aufgeteilt wird, wodurch eine Dreidimensionalität entsteht. Mit einem solchen Verfahren könnten beispielsweise dreidimensionale Bilder oder Furniere entstehen oder auch Anwendungen im Modellbau sind denkbar.

Ein Verfahren, das es ermöglicht, Kunststoffe gleich am Anfang einer Produktionsstrecke bebildern zu können und diese erst danach weiterzuverarbeiten (Tiefziehen, Thermoumformen, Streckblasformen, Blasformen, etc.), würde aber eine Reihe von Vorteilen bieten. Einerseits gestattet dieser Prozess völlig neue Designmöglichkeiten von Produkten. Bilder können dreidimensional verformt oder gedehnt werden, das Bild kann sich auch komplizierten Formen problemlos anpassen. Ein gutes Design ist für ein Produkt überlebenswichtig.

Andererseits werden durch das beschriebene Verfahren die Produktionskosten erheblich verringert. Oft können dadurch teure Spritzgussverfahren umgangen werden und auch geringere Stückzahlen werden dadurch finanziell realisierbar. Weitere Vorteile dieses Verfahrens sind die gute Recycelbarkeit der Produkte, da keine Verbundwerkstoffe hergestellt werden. Auch können die Haftschichten in der Regel mit wasserhaltigen Tinten/Farben bebildert werden und lösungsmittelhaltige Farben sind nicht erforderlich.

Das auf einen Kunststoff übertragene Bild sollte besonders für die Weiterverarbeitung in industriellen Bereichen folgende Eigenschaften besitzen:
- die Übertragung sollte preiswert und relativ einfach sein
- das Bild sollte abriebfest sein
- das Bild sollte sich bei elastischen Dehnungen oder bei plastischen Umformungsprozessen wie ein Teil des Kunststoffs selbst verhalten und seiner Bewegungsdynamik vollständig folgen können, es sollte bei Dehnung nicht reißen und bei Belastung keinen Schaden nehmen
- bei der Übertragung eines Bildes in einen Kunststoff sollten so wenig wie möglich zusätzliche Schichten anderer Kunststoffe oder Materialien notwendig sein, die anschließend auf dem Bild verbleiben, um stofflich relativ homogene Körper herzustellen

Zur Übertragung von beispielsweise Digitalbildern auf die Oberfläche fester Kunststoffe sind eine Reihe von Verfahren entwickelt worden, die man grob in drei Gruppen unterteilen kann:
1) Bei der Herstellung eines Verbundsystems (DE 102004049592A1, DE 103 27 453 A1, EP 1647399A2) werden Tintenstrahldrucke zunächst auf ein System verschiedener Folien übertragen, der Folienverbund wird der gewünschten Form angepasst und anschließend diese mit Kunststoff hinterspritzt.
2) In anderen Verfahren wird der Tintenstrahldruck mittelbar auf eine Kunststoffoberfläche aufgetragen. Hierzu gibt es diverse Methoden, denen gemeinsam ist, dass hohe Temperaturen und / oder hoher Druck oder die Zuhilfenahme anderer Agenzien erforderlich sind. Diese Verfahren unterscheiden sich darin, dass entweder eine mit einem Digitaldruck bedruckte gesamte Folie auf den Kunststoff gebracht oder dass nur eine bestimmte Schicht einer bedruckten Folie auf den Kunststoff übertragen wird. In vielen Fällen muss noch eine weitere Schutzschicht aufgetragen werden, um das Digitalbild vor mechanischen Einflüssen wie beispielsweise Abrieb zu bewahren. (EP 1464512A2, EP 0858913A1, DE 60018808T2, DE 6962078T2, EP 1188570A2, DE 69820120T2, DE 69805507T2, andere der Klasse B41 M 5/035). Nach der in WO 2004/037556 A1 beschriebenen Methode wird das Digitalbild auf eine einem temporären Träger aufliegenden Schicht gedruckt. Parallel dazu wird die Oberfläche des zu bedruckenden Werkstücks aus Kunststoff derart verändert, dass sie adhäsiv ist und das Digitalbild durch Adhäsionskräfte aufnehmen kann, wenn der temporäre Träger mit bedruckter Schicht auf den zu bedruckenden Kunststoff aufgepresst wird. Dabei löst sich die Schicht mit dem Digitalbild vom temporären Träger und verbleibt auf der vorbehandelten Kunststoffoberfläche. Der temporäre Träger kann vom Werkstück entfernt werden. Auch diese Methode erfordert gewöhnlich eine weitere Schutzschicht.
3) Eine dritte Möglichkeit besteht in der Verwendung von Tinten, die auf dem zu bedruckenden Werkstück eine Reaktion auslösen, welche dann zu deren Fixierung führt: Sublimationstinten besitzen eine Kunststoffkomponente als Bindemittel. Der Digitaldruck wird zunächst auf eine siliconisierte Trägerschicht aufgedruckt und dann unter Verwendung von Druck und mehr oder weniger hoher Temperatur in einer Transferpresse auf den Kunststoff aufgeschmolzen, wobei die Kunststoffkomponente der Tinte schmilzt und sich dabei mit dem Kunststoff des zu bedruckenden Werkstückes verbindet. Danach kann der Zwischenträger entfernt werden (DE 20017119U1, WO 03/082595 A1). Ein ähnliches Verfahren stellt der substratreaktive Digitaldruck dar (US 6,402,31). Hier reagieren funktionelle Gruppen bestimmter Komponenten in der Tinte mit funktionellen Gruppen der Werkstückoberfläche, dieser kommt für die Übertragung auf Kunststoff allerdings weniger in Frage. Eine weitere Variante ist die Verwendung von Tinten, die als Komponente ein Lösungsmittel besitzen, was die Oberflächenlackierung der zu bedruckenden Oberfläche auflöst und es dadurch zu einer Fixierung der Farben kommt (EP 1080933 A2).

Zur Übertragung von Bildern und Marken auf elastische Gegenstände existieren Verfahren, in denen man zunächst die Oberfläche der zu bedruckenden Gegenstände vorbehandelt und diese mit diversen entfettenden Lösungsmitteln reinigt. Anschließend erfolgt die weitere Behandlung der Oberfläche, um sie auf den bevorstehenden Druck vorzubereiten. In der Regel wird hierzu ein Siebdruckverfahren verwendet (DE 19829242 A1, US 3,617,326, andere). Auch ein Bildaufdruck auf einen gedehnten Gegenstand ist möglich (GB 2077661 A, andere). Ein fotorealistischer Digitaldruck auf einen nur wenig dehnbaren, mit Latex überzogenen Stoff wird in der WO 96/21701 beschrieben. In diesem Verfahren besitzen die Farbstoffe Latexkomponenten. Allerdings wird in diesem Patent darauf hingewiesen, dass das Bild bei Erwärmung oder bei Anwendung von Reinigungsmitteln nicht besonders widerstandsfähig ist, was wieder auf das Grundproblem des Digitaldrucks auf elastische Werkstücke hinweist.

Eine Übertragung von gedruckten Bildern auf verschiedene Ebenen innerhalb eines Formkörpers aus Kunststoff ist bisher nicht beschrieben. Das Übereinanderlegen von Verbundsystemen würde einen inhomogenen Gegenstand schaffen und es käme zu optischen Störungen. Andere bekannte Verfahren zur Aufbringung von Digitalbildern würden durch die Verwendung stofffremder Haftschichten (durch Sublimation übertragener, andersartiger Kunststoffschichten) die Homogenität des Kunststoffs ebenfalls stören.

Die US- 4 490 410 offenbart ein Verfahren zur Fixierung von Bildern in Kunststoffformkörpern.

Der Erfindung liegt nun die Aufgabe zugrunde, ein Verfahren zur Fixierung von Bildern in Kunststoffformkörpern anzugeben, mit dem es möglich ist, Bilder in einem Kunststoffformkörper so zu fixieren, dass das Bild in diesem eingebettet ist und auch bei elastischen Kunststoffformkörpern keine bleibenden Veränderungen erfährt. Bei der Übertragung des Bildes in den Kunststoffformkörper sollen keine Qualitätsverluste des Bildes eintreten.

Die Lösung der Aufgabe erfolgt mit einem Verfahren zur Fixierung von Bildern in Kunststoffformkörpern nach dem Erzeugen eines Bildes auf einer Haftschicht, das dadurch gekennzeichnet ist, dass auf das auf der Haftschicht mit oder ohne zusätzlichem Träger erzeugte Bild eine Bildaufnahmeschicht aus flüssigem Kunststoff aufgetragen wird, wobei Bestandteile der Haftschicht mindestens teilweise beim Auftragen des flüssigen Kunststoffes mit diesem mischbar sind, und anschließend die flüssige Kunststoffphase in eine feste Kunststoffphase überführt wird. Unter Mischbarkeit ist auch zu verstehen, dass sich die Bestandteile der Haftschicht im weitesten Sinne durch molekulare Wechselwirkungen mit der flüssigen Kunststoffphase verbinden.

Vorteilhafte Weiterbildungen sind in den Unteransprüchen angegeben.

So ist eine Ausgestaltung des erfindungsgemäßen Verfahrens dadurch gekennzeichnet, dass auf das auf der Haftschicht erzeugte Bild die Bildaufnahmeschicht aus flüssigem Kunststoff aufgetragen und nach einer Einwirkzeit von mindestens einer Sekunde diese flüssige Kunststoffphase in eine feste Kunststoffphase überführt wird.

Vorteilhafte Weiterbildungen des Verfahrens sind dadurch gekennzeichnet, dass eine Kunststoffschmelze oder ein flüssiger härtbarer Kunststoff aufgetragen wird.

Eine Ausgestaltung des erfindungsgemäßen Verfahrens ist dadurch gekennzeichnet, dass ein flüssiger Kunststoff aufgetragen wird, der ein Lösungsmittel oder ein Lösungsmittelgemisch enthält.

Eine weitere Ausgestaltung des erfindungsgemäßen Verfahrens ist dadurch gekennzeichnet, dass ein flüssiger Kunststoff aufgetragen wird, der hydrophile oder hydrophobe Lösungsmittel enthält.

Eine Weiterbildung der Erfindung ist dadurch gekennzeichnet, dass ein zusätzlicher Träger der Haftschicht nach der Überführung der Bildaufnahmeschicht in die feste Kunststoffphase entfernt wird.

Eine vorteilhafte Ausgestaltung ist dadurch gekennzeichnet, dass ein Volumen an flüssigem Kunststoff aufgetragen wird, das wenigstens so groß wie das Volumen der Haftschicht ist.

In einer weiteren Ausgestaltung wird nach dem Entfernen des Trägers an seiner Stelle eine Grundschicht aus Kunststoff aufgetragen.

In einer weiteren Ausgestaltung wird die Grundschicht als flüssige Kunststoffphase aufgetragen.

Eine weitere Ausgestaltung ist dadurch gekennzeichnet, dass die Grundschicht als feste Kunststoffphase aufgetragen wird.

In einer weiteren Ausgestaltung wird eine Zusammensetzung der Haftschicht ausgewählt, die mit dem flüssigen Kunststoff der Bildaufnahmeschicht in molekulare Wechselwirkungen tritt.

In einer vorteilhaften Ausgestaltung wird eine Haftschicht eingesetzt, die mindestens einen Bestandteil enthält, der in der flüssigen Kunststoffphase wenigstens teilweise lösbar ist und/oder eine chemische Reaktion mit dem Kunststoff eingeht.

Es können handelsübliche Polyesterfolien mit einer haftvermittelnden Schicht verwendet werden.

Eine weitere vorteilhafte Ausgestaltung ist dadurch gekennzeichnet, dass flüssige duroplastische, thermoplastische und elastomere Kunststoffe oder Kunststoffmischungen aufgetragen werden, die nach dem Übergang in die feste Kunststoffphase transparente, nichttransparente, transluzente oder opake optische Eigenschaften aufweisen und/oder eingefärbt sind.

Weitere Ausgestaltungen des Verfahrens sind dadurch gekennzeichnet, dass Polyurethane; eine Mischung aus Polyurethan und Siliconen; Epoxide und Polyester; wässrige Polymerdispersionen; Polycarbonate; Polyethylen, Polypropylen oder Polystyren oder andere Polyalkylene eingesetzt werden.

In einer weiteren Ausgestaltung werden Polymere aus der Gruppe der Acrylverbindungen eingesetzt.

In einer Weiterbildung des Verfahrens wird der Träger nicht entfernt und fungiert damit als Grundschicht.

Eine Ausgestaltung der Erfindung sieht vor, dass die Bildaufnahmeschicht als fester Kunststoff auf das auf einer Haftschicht erzeugte Bild aufgetragen und dann mindestens teilweise in die flüssige Phase gebracht wird.

Das erfindungsgemäße Verfahren sieht auch vor, dass ein durch Erhitzen schmelzbarer Kunststoff verwendet wird.

Eine weitere Ausgestaltung ist dadurch gekennzeichnet, dass der feste Kunststoff als Folie auf die Haftschicht laminiert oder extrudiert wird.

In einer Weiterbildung weist die Haftschicht einen entfernbaren Träger auf.

Die Haftschicht kann grenzflächenaktive Substanzen wie Tenside, die vorteilhafterweise das sich Verbinden bestimmter insbesondere polymerer Bestandteile mit der flüssigen Kunststoffphase begünstigen, enthalten, wobei als Kunststoffe modifizierte natürliche Polymere wie Polymere auf Basis von Zellulose oder Gelatine sowie Proteine enthalten sein können.

Das mit dem erfindungsgemäßen Verfahren fixierte Bild ist dadurch gekennzeichnet, dass der Kunststoffformkörper mit dem Bild elastisch verformbar ist, ohne dass das Bild beim Verformen bleibende Veränderungen erleidet.

Der das fixierte Bild tragende Kunststoffformkörper kann teilweise oder vollständig transparente, nichttransparente, transluzente oder opake optische Eigenschaften aufweisen und/oder ist eingefärbt.
Der Kunststoffformkörper kann ein Hohlkörper sein.

Eine Ausgestaltung des Verfahrens zur Fixierung von Digitalbildern in Kunststoffformkörpern nach dem Erzeugen eines Digitalbildes mittels Digitaldruck auf einem eine haftvermittelnde Schicht aufweisenden Träger ist dadurch gekennzeichnet, dass auf das auf einer Haftschicht erzeugte Digitalbild eine Bildaufnahmeschicht aus flüssigem Kunststoff gemäß Anspruch 27 aufgetragen und nach einer Einwirkzeit von mindestens einer Sekunde diese flüssige Kunststoffphase in eine feste Kunststoffphase überführt wird.

Herkömmliche Verfahren, in denen Bilder auf Kunststoff übertragen werden, basieren auf einer wie auch immer gearteten Aufbringung einer das Bild tragenden Schicht auf eine bereits auspolymerisierte, erhärtete Kunststoffoberfläche. Hierbei wird (oft unter Verwendung von hohem Druck und/oder hohen Temperaturen) die bildtragende Schicht in die Oberflächenporen des Kunststoffkörpers eingearbeitet. Die bildtragende Schicht haftet durch Adhäsionskräfte, die sich zwischen beiden Flächen ausbilden. Allerdings ist die Größe der Adhäsionsfläche begrenzt, was sich auf die Qualität der Haftung des Bildes auswirkt. Einerseits ist das Bild empfindlich gegenüber Abrieb. Andererseits sind thermische Umformungsprozesse oder elastische Dehnung des Kunststoffwerkstücks kaum möglich, da das Bild reißen oder sich ablösen würde.

Die hier vorliegende Erfindung zeigt eine einfache Möglichkeit, ein Bild direkt in einem Kunststoffformkörper einzubetten und dort ohne Qualitätsverluste zu fixieren. Durch dieses Verfahren wird das Bild derart im Kunststoff vernetzt, dass es seiner Bewegungsdynamik bei elastischer Dehnung oder thermoplastischer Verformung vollständig folgt und auch vor Abrieb geschützt ist. Das Bild haftet nicht nur auf der Kunststoffoberfläche, sondern wird im Kunststoffformkörper eingeschlossen, was die hohe Qualität der Verbindung ausmacht.

Vorteile dieses Verfahrens in industriellen Anwendungsgebieten:
- Die Übertragung von Drucken auf bzw. in einen Kunststoffkörper erfolgt in einem finanziell günstigen Verfahren
- Das Produkt stellt in der Regel ein homogenes Material dar (Materialkombinationen sind möglich), das ohne das Auftreten von Materialspannungen (wie bei Verbundsystemen) wesentlich komplexeren Umformungsprozessen unterworfen werden kann. Das Produkt kann beispielsweise verdrillt und gedehnt werden, ohne dass das Bild durch Risse zerstört wird.
- Eine anschließende erneute Eingießung mit Kunststoff zu einem komplex aufgebauten, aber aus einem vorzugsweise homogenen Material bestehenden Formkörper ist durchführbar. Anwendunggebiete hiefür liegen beispielsweise im Modellbau.
- Manche Kunststoffprodukte unterliegen nach ihrer Fertigstellung hohen mechanischen Beanspruchungen, beispielsweise bei ihrer Verwendung als Oberlederersatz in der Schuhindustrie. Hier ist das materiell homogene erfindungsgemäße Produkt (bestehend aus einer oberen Struktur- und einer unteren Druckschicht) besonders vorteilhaft, da bei ständigem Knicken, Dehnen und Biegen keine Materialspannungen zwischen den Schichten zu Defekten im Bild führen können.
- Das Erzeugen eines Bildes auf einer erfindungsgemäßen Haftschicht kann durch Drucken mit wasserlöslichen Druckerfarben durchgeführt werden und erfordert keine lösungsmittelhaltigen Druckerfarben oder den Zusatz bestimmter Komponenten zur Druckertinte.
- Ein weiterer Vorteil gegenüber Verbundmaterialien besteht darin, dass der Kunststoff mit Druck zunächst in einer Etappe hergestellt werden kann und erst dann gestanzt, geschnitten, gesägt, etc. und letztlich (in der Regel thermoplastisch) verformt wird. Das kostspielige Spritzgussverfahren wird so umgangen.
- Durch das Aufteilen spezifischer Bildinformationen eines Bildes auf übereinander liegende Ebenen können räumliche Abbildungen mit 3D-Charakter entstehen, nutzbar beispielsweise bei der Gestaltung von Furnieren, bei der Bilddarstellung oder auch im Modellbau.

In anderen bekannten Verfahren wird der Digitaldruck nur oberflächlich auf Kunststoffe übertragen. Der qualitative Unterschied zu diesen anderen Verfahren wird in folgenden Punkten deutlich:
1) Die Haftoberfläche ist im Vergleich zu anderen Verfahren stark vergrößert. Beim Auspolymerisieren des noch flüssigen Kunststoffs bzw. beim Erhärten der Kunststoffschmelze auf der bildtragenden Haftschicht gelangen die Makromoleküle des flüssigen Polymers in feinste Zwischenräume der Haftschicht mit dem in ihr eingeschlossenen Bild.
   In diesem Verfahren werden kleinste Haftereignisse in einer großen Gesamtdichte erzielt, so dass sich auftretende Spannungen zwischen Bild und Kunststoffoberfläche konstant und gleichmäßig über die gesamte Haftfläche ausbreiten können. Das auf die Bildaufnahmeschicht übertragene Bild zeigt auch bei starken mechanischen Belastungen keine Risse oder andere Schäden.
2) Die Polymermoleküle (besonders die der Duromere) sind in der Lage, auf molekulare Wechselwirkungen und elektrostatische Kräfte der bildtragenden Haftschicht zu reagieren und sich im Makromolekülaufbau entsprechend zu orientieren und auszurichten. Durch kovalente Bindungen, Ionenbeziehungen oder elektrostatische Kräfte entstehen starke Verbindungen zwischen Haftschicht und Kunststoffmakromolekül.
3) Beim Einbringen eines flüssigen z.B. eines nicht vollständig auspolymerisierten Polymers (Duromere, Elastomere) oder eines geschmolzenen Polymers (Thermoplaste) in die Haftschicht kommt es zu molekularen Verhakungen mit den bildtragenden Partikeln, die besonders bei Dehnprozessen das Bild der Bewegungsdynamik des Kunststoffs folgen lassen.

Für diese Erfindung nutzbare Polymere sind nicht vollständig auspolymerisierte (in der Regel vorpolymerisierte) Polyurethane und viele Polyurethanverbindungen, in denen der Polyurethananteil überwiegt (einschließlich Polyurethan/Siliconverbindungen).

Ebenfalls sehr geeignet für dieses Verfahren sind Epoxidharze und Epoxidharzverbindungen, in denen der Epoxidharzanteil überwiegt. Sowohl Polyurethanharze als auch Epoxidharze polymerisieren durch Polyaddition.

Geeignet sind ebenfalls thermoplastische Kunststoffe.

Grundsätzlich ist es möglich, durch das erfindungsgemäße Verfahren ein Bild sowohl auf transparente, transluzente oder opake Kunststoffe als auch auf nicht transparente oder eingefärbte Kunststoffe zu übertragen. Tranparente und bedingt auch transluzente Kunststoffe eignen sich für Bildaufnahmeschichten oberhalb eines Bildes; nicht transparente, opake, transluzente und eingefärbte Kunststoffe eignen sich für Grundschichten unterhalb eines Bildes.

Es ist möglich, dass das Bild auf eine Haftschicht übertragen wird, die auf einem Träger ablösbar fixiert ist.
Weiterhin ist es möglich das Bild auf eine Haftschicht zu übertragen, die auf einem Träger (Grundschicht) nicht ablösbar fixiert ist, so dass der Träger eine Schutzschicht für das Bild darstellt, z.B. als Kratzschutz für die Kunststoffphase. Darüberhinaus kann das Bild auf eine Haftschicht übertragen werden, die nicht auf einem Träger fixiert ist.

Der Träger einer Haftschicht ist vorzugsweise eine Folie, wobei die Folie aus einem folienbildenden Kunststoff oder einem anderen zur Folienbildung nutzbaren Stoff besteht. Für das hier beschriebene Verfahren hat sich vorzugsweise ein Träger aus Polyester als vorteilhaft erwiesen, da dieser auch bei hohen Temperaturen beständig bleibt. Polyurethane, Epoxidharze als auch deren Verbindungen lassen sich durch Peelen von dieser Unterlage aus Polyester gut lösen.
Als Träger werden auch Folien aus Polymermischungen verwendet. Die Dicke der Trägerfolie (mit daraufliegender Haftschicht) beträgt vorzugsweise ca. 40 bis 200 µm. Sie kann aber auch dünner oder erheblich dicker sein.

Bildtragende Haftschichten sind bekannt. Die erfindungsgemäßen Haftschichten enthalten jedoch in die flüssige Phase bringbare Kunststoffe, mit denen die flüssigen Makromoleküle der Bildaufnahmeschicht in Wechselwirkung treten können. Außerdem enthält die Haftschicht vorzugsweise hydrophile Füllstoffe (Kalk, Kieselgel, Aluminiumoxid, Cellulosepulver und ähnliches) sowie möglicherweise Detergenzien, die das Eindringen hydrophiler Tinten (Farbe, Pigmente) oder sonstiger hydrophiler bildgebender Partikel in die Haftschicht begünstigen. Die Haftschicht kann aber auch anders geartete Füllstoffe z.B. Füllstoffe hydrophober Natur enthalten, die für hydrophobe Druckertinten geeignet sind.
Die Haftschicht ist so beschaffen, dass sie sich nach ihrer Verbindung mit der Bildaufnahmeschicht leicht von ihrem Träger z.B. durch Peelen lösen lässt.

Als hydrophile in die flüssige Phase bringbare Kunststoffe, die sich als Bestandteile der Haftschicht eignen und die mit den Kunststoffen der Bildaufnahmeschicht in Wechselwirkung treten können, kommen beispielsweise die folgenden in Frage:
- Cellulosederivate: Carboxymethylcellulose, Acetylbutyryl- und Popiongruppen, Ethylcellulose, Hydroxyethylcellulose, Hydroxymethylcellulose, Hydroxypropylmethylcellulose, Methylcellulose und Derivate, Nitrocellulose, Celluloid
- Polyethylenoxid
- hydrolisierte Kunststoffe (z.B. hydrolisiertes Polyethylen, hydrolysiertes Polyacrylnitril)
- Gelatinederivate: Kollagen (Ausgangsprodukt), fraktionierte Gelatine, Kollagenhydrolysate, Elastinhydrolysate, andere Gelatinederivate
- Polymere auf Gelatinebasis
- Elastomere auf Gelatinebasis
- andere organische Gerüstbildner aus hydrophilen Makromolekülen oder oberflächenaktiven Makromolekülen
- andere hydrophil - hydrophobe Hybridmaterialien enthaltend polare Lösungsmittel und oberflächenaktive Verbindungen
- bedruckbare Kunststoffe (hydrophilierte Kunststoffe
   oder Kunststoffe mit poröser Oberfläche bzw. niedriger Oberflächenspannung)
- Polyvinylbutyral (PVB) und PVB-Blends
- hydrophile Füllstoffe
- Alkyl(meth)acrylamide

Die Gewichtsanteile der hydrophilen Haftschichtkomponenten liegen zwischen 100% (z.B. bei reiner Cellulose-2-acetat-Schicht) bis ca. 30% (z.B. Polybutyral in PVB-Blends), vorzugsweise liegen sie zwischen 60% und 40%.

Methylcellulose und deren Derivate sind mit wasserlöslichen (und auch mit hydrophoben Farben/Tinten) bedruckbar. Gleichzeitig können sie mit quervernetzenden Polymeren Wechselwirkungen eingehen und auch von geschmolzenen Thermoplasten in ihrer Struktur durchdrungen werden. Sie können alleinig oder in Polymerkombinationen mit oder ohne Additive als Haftschicht fungieren. (in Wasser lösbar)

Cellulose-2-acetat und deren Derivate (z.B. Acetylbutyryl-Cellulosen oder mit Propionylgruppen) können mit wasserlöslichen (und auch hydrophoben Farben/Tinten) bedruckt werden. Gleichzeitig können sie thermoplastische Verbindungen zu anderen Kunststoffpolymeren eingehen und sind thermoplastisch verformbar. Sie sind dehnbar, was bei der Verarbeitung mit Siliconen von Bedeutung ist. Sie können alleinig oder in Polymerkombinationen mit oder ohne Additive als Haftschicht fungieren. (in Aceton lösbar)

Nitrocellulose und deren Derivate können mit wasserlöslichen (und auch hydrophoben Farben/Tinten) bedruckt werden. Gleichzeitig können sie mit quervernetzenden Polymeren Wechselwirkungen eingehen und auch von geschmolzenen Thermoplasten in ihrer Struktur durchdrungen werden. Sie können alleinig oder in Polymerkombinationen mit oder ohne Additive als Haftschicht fungieren. (in organischen Lösungsmitteln lösbar)

Polyethylenoxide können mit wasserlöslichen (und auch hydrophoben Farben/Tinten) bedruckt werden. Gleichzeitig können sie thermoplastische Verbindungen zu anderen Kunststoffpolymeren eingehen und sind thermoplastisch verformbar. Sie können ebenfalls Wechselwirkungen mit Polyurethanen, Epoxidharzen und anderen Duroplasten während deren Polymerisierung eingehen. Sie können alleinig oder in Polymerkombinationen mit oder ohne Additive als Haftschicht fungieren. (in Wasser lösbar)

Modifizierte Gelatinetypen haben oberflächenaktive Eigenschaften und können mit wasserlöslichen (und auch hydrophoben Farben/Tinten) bedruckt werden. Gleichzeitig können sie mit quervernetzenden Polymeren Wechselwirkungen eingehen und auch von geschmolzenen Thermoplasten in ihrer Struktur durchdrungen werden. Spannungen, die durch das Erhitzen von Gelatinefilmen entstehen, können durch Beigabe von Beimischungen (z.B. Glycerin) abgebaut werden. Gummihaltige Eigenschaften erhält Gelatine durch die Behandlung mit Formaldehyd in Formamid, was bei der Verarbeitung mit Siliconen von Bedeutung ist. Gelatinelösungen können diverse Kunststoffe problemlos benetzen (z.B. Acryl, Polyethylenterephthalat, Polyethylen, Propylen). Gelatinemembranen sind beispielsweise aus Gelatine, Glycerin, Polyethylenglycole und deren Estern möglich.
Sie können alleinig oder in Polymerkombinationen mit oder ohne Additive als Haftschicht fungieren. (lösbar in Wasser, nichtwässrige Lösungen von Gelatine z.B. in Essigsäure, bei Zugabe von Elektrolyten und Wasser in Aceton und Alkohol, in Benzolsulfonsäure, polyhydritische Alkohole)

Polymere auf Gelatinebasis, die als Haftschichten eingesetzt werden können: Gelatine agiert als mehrfach wirkendes Amin in Härtungsprozessen für OH- und NH2-Guppen enthaltende Makromoleküle.
Gelatine kann auch mit wasserlöslichen Polymeren copolymerisiert werden. Verschiedene andere Copolymere werden aus Gelatine mit Methyl, Ethyl-, Butylacrylat, Vinylacetat-, Styrol-, Methylmethacrylat und Acrylnitril gewonnen.
Thermoplastische Polymere werden aus Rohgelatine, Anifin, und Formaldehyd hergestellt. Copolymerisation von Gelatine mit Phenolformaldehydharzen, Polyvinylchlorid, Acrylonitril und anderen.
Styrol und Methylmethacrylat können in Gegenwart von Gelatine polymerisieren. Wasserlösliche Redoxpolymere werden durch Behandlung der Gelatine mit Benzochinonderivaten und durch Reaktion mit Diisocyanaten hergestellt.
Verarbeitung der Gelatine mit Polyurethanen durch Polymerisation von Polyisocyanaten mit gelatinehaltigen Polyolen.
Gelatineharze können durch Kondensationsreaktionen hergestellt werden (z.B. Kondensation von Gelatine und Maleinanhydrid).
Gelatine wird mit Formaldehyd reagiert, um sie als Schicht auf Textilien auzubringen. Poröse Gelatinebeschichtungen für Textilien werden durch die Verwendung von Gelatine in Verbindung mit Tetrahydronaphthalin, einem Emulsionsmittel, Ammoniumkaseinat, Salzsäure und Zinkoxychlorid hergestellt.

Elastomere Polymere auf Gelatinebasis, die als Haftschichten eingesetzt werden können:
Schmelzmischungen von Gelatine mit Wasser, die mit Glycerin vermischt werden.

Die Einführung von schwefelhaltigen Gruppen in das Gelatineprotein ergibt ebenfalls gummiartige Produkte.
Die Reaktion von Gelatine mit zweibasischen Säuren und Polyolen ergibt ebenfalls ein elastomeres Polymer.
Die Behandlung der Gelatine mit einer Säure oder einer Base und dann mit Dimethylsulfat und Kresol lassen gummiartige Polymere entstehen.
Ähnliche Elastomere entstehen durch die Behandlung von Gelatine mit Schwefel und Dichlorethylen, sowie durch Koagulierung des Produktes mit Phenol und einem Gerbmittel.
Butadienarylnitrilgummi und Rohgelatine werden mit Oberflächenbehandlungsmitteln gemischt und ergeben ebenfalls ein Gelatineelastomer.

Polyvinylbutyral (PVB) als Elastomer mit hydrophilen Eigenschaften
Polyvinylbutyral ist aufgrund seines Gehalts an OH-Gruppen zur Aufnahme hydrophiler (und auch hydrophober) Farben/Tinten fähig. Es hat stark klebende Eigenschaften und verbindet sich ebenfalls mit Kunststoffen. Besonders geeignet ist PVB für Haftschichten, deren Bildaufnahmeschicht aus Siliconen oder anderen Elastomeren besteht. PVB kann als reine Schicht oder als Polymergemisch mit anderen Kunststoffpolymeren (z.B. Gemisch aus Polyvinylbutyral, Polymethylmethacrylat, thermoplastisches Polyurethan) fungieren.

Darüberhinaus sind geeignet Pflanzenproteine, Pflanzenproteinhydrolysate und deren Gemische sowie pflanzliche Moleküle aus Mehrfachzuckern (z.B. Lignin mit oder ohne Tenside, Hemicellulose mit oder ohne Tenside, Stärkeverbindungen mit oder ohne Tenside) sowie Tierproteine, Tierproteinhydrolysate und deren Gemische (z.B. Casein-Formaldehyd, Polymere Keratin).

Hydrophil-hydrophobe Hybridmaterialien enthaltend polare Lösungsmittel und oberflächenaktive Verbindungen
Organosiloxanpolyglycolcopolymere (z.B. Polyglycolsiloxancopolymere in Mischung mit verschiedenen Tensiden bzw. Tensidmischungen)

Als wasserlösliches Harz mit Vinylalkoholeinheiten können vorzugsweise Polyvinylalkohole verwendet werden, diese können teilweise modifiziert sein durch Acetalisierung oder durch Butyralisierung oder ähnliches.

Die verwendeten wasserlöslichen oder wasserdispergierbaren Harze mit einer aromatischen Polyestereinheit bestehen vorzugsweise aus aromatischen Dicarbonsäureverbindungen und aliphatischen Diolverbindungen, die funktionelle ionische Gruppen im Molekül besitzen.
Zusätzlich enthält das Bindemittel eine niedermolekulare Verbindung mit einer höherfunktionellen reaktionsfähigen Gruppe, die die Vernetzungseigenschaften des Bindemittels erhöht.

Als hydrophobe in die flüssige Phase bringbare Kunststoffe, die sich als Bestandteile der erfindungsgemäßen Haftschicht eignen, kommen beispielsweise die folgenden in Frage:
Acrylnitril-Butadien-Styrol (ABS)
Polyamide (PA)
Polycarbonat (PC)
Polystyrol (PS)
Polyvinylchlorid (PVC)
Thermoplastische Polyurethane (TPU)
Acrylnitril-Styrol-Acrylester (ASA)
Polybutylenterephthalat (PBT)
Polyethylenterephthatlat (PET)
Polyethylen (PE)
Polypropylen (PP)
Ethylen-Propylen-Terpolymer (EP(D)M)
Polyphenylenoxid (PPO)
Polyvinylbutyral (PVB)
Polymethylmethacrylat (PMMA)

Die Gewichtsanteile der hydrophoben Haftschichtkomponenten liegen bei 0% (z.B. bei reiner Methylcelluloseschicht) und 70% (nicht hydrophile Bestandteile in Polymerblends), vorzugsweise liegen sie bei ca. 40% und 60%.

Einige Kunststoffpolymere (z.B. Celluloseacetat, Polyethylenoxid, Gelatinepolymere und andere), die sich sowohl mit dem Kunststoff der Bildaufnahmeschicht verbinden als auch hydrophile Farbe aufnehmen können, sind als homogene Haftschicht einsetzbar. Sie können aber auch kombiniert werden mit anderen Polymeren.

Andere Haftschichten, die hydrophile Bestandteile enthalten, die nicht direkt mit dem Kunststoff der Bildaufnahmeschicht verbunden werden können, benötigen zusätzliche hydrophobe Bestandteile, die die Verbindung zwischen hydrophilen Bestandteilen und dem hydrophoben Kunststoff der Bildaufnahmeschicht herstellen.

Diese hydrophoben Bestandteile bestehen vorzugsweise aus Kunststoffpartikeln (gelöst oder als Pulver) mit gleichen oder ähnlichen Eigenschaften wie die des Kunststoffs der Bildaufnahmeschicht. Diese hydrophoben Bestandteile können sowohl aus einem einzigen Kunststofftyp bestehen als auch aus einem Kunststoffpolymergemisch (Polymerblends).

Verwendete Polymerblends sind beispielsweise:
ABS-Blends mit PA, PC, PVC,TPU
ASA-Blends mit PC, PVC
PC-Blends mit PBT, PET
PS-Blends mit PE
PP-Blends mit EP(D)M
PPO-Blends mit PS, PA
PVB-Blends mit PMMA und TPU
und andere

Darüberhinaus dienen Tenside, Weichmacher und weitere Additive in Haftschichten zur Verbesserung der Eigenschaften:
Als Tenside dienen Verbindungen mit hydrophilen kationischen, anionischen oder
amphoteren und nichtionischen Gruppen und mit hydrophoben Gruppen wie Alkyl- oder Arylkomponenten. Weiterhin können Niotenside wie Ethylenoxid, Fettsäuren oder
Polyglycerin verwendet werden oder andere grenzflächenaktive nichtionische Vertreter mit hydrophilen Polyetherketten oder Hydroxygruppen).
Zu einer besseren Filmbildung können Verlaufsmittel wie hochsiedende Lösungsmittel z.B. Tetra- oder Decahydronaphthalin zum Einsatz kommen.
Niedrigviskose oder hochviskose Weichmacher wie Dioktylphthalat (Di-2-(ethylhexyl)phthalat), Polymere wie Celluloseacetat, Polyurethane, Phenolharze usw. oder Sulfonamide sind für die bessere Filmbildung der hydrophoben Haftschichtbestandteile teilweise notwendig.
In die Haftschicht können weiße Pigmente wie z.B. Titanoxid, Bariumsulfat oder Calciumcarbonat eingebracht werden.

Als Beschichtungsverfahren für das Auftragen der Haftschicht auf einen Träger werden beispielsweise eingesetzt:
- Druckluftspritzen
- Airless-Spritzen
- elektrostatisches Sprühen
- Bandbeschichtung
- Tauchbeschichtung
- Hochdruck
- Laserspritzen
- Laserbeschichtung
- Offsetdruck
- Pulverbeschichtung
- thermisches Spritzen
- Tiefdruck
- Rakelbeschichtung, Luftrakelbeschichtung
- Walzenlackierung
- Extrusion
- Laminieren

Haftschichten auf Polyesterträgerfolien (Unterlagen) sind bekannt und käuflich erhältlich.

Das Peelen des Trägers der Haftschicht von der im Polymer der Bildaufnahmeschicht befindlichen Haftschicht erfolgt in der Regel bei Raumtemperatur.
Bei fehlerhaftem Peelen können auftretende Probleme durch vorheriges Kühlen der Bildaufnahmeschicht mit Haftschicht und Träger auf einen Bereich zwischen 4°C und 8°C behoben werden.
Das Peelen stellt sich als Adhäsionsversagen der Kräfte zwischen Haftschicht und Träger dar. Das Peelen selbst kann maschinell oder manuell erfolgen. Peelwinkel unter 45° haben sich als ungeeignet erwiesen. Sehr gute Ergebnisse erzielen Peelwinkel um 90° und höher, aber auch Peelwinkel um fast 180° sind möglich.
Der durch Peelen entfernte temporäre Träger kann in vielen Fällen bei sachgemäßer Handhabung wieder verwendet werden. Problematisch ist seine Wiederverwendung, wenn Verformungen zu unplanen Oberflächen führen, wenn er durch häufigen Gebrauch spröde wird oder wenn Teile der Haftschicht sich nicht vollständig in der Bildaufnahmeschicht gelöst haben.

Das in einem Kunststoffformkörper einzubringende Bild wird zunächst vorzugsweise durch einen Tintenstrahldruck mit wasserlöslichen Tinten oder durch ein anderes dafür nutzbares Verfahren auf die Haftschicht übertragen. Wichtig ist hierbei, dass durch Auswahl und Abstimmung der Bestandteile (hydrophile und/oder hydrophobe Polymere) der Haftschicht und des Kunststoffes der Bildaufnahmeschicht molekulare Wechselwirkungen zwischen der bildtragenden Haftschicht und der flüssigen Bildaufnahmeschicht ausgelöst werden.

Auf die Haftschicht wird beispielsweise ein noch flüssiges, nicht vollständig auspolymerisiertes Kunststoffpolymer einer Bildaufnahmeschicht aufgegossen. Dieses (in der Regel vorpolymerisierte) Kunststoffpolymer kann entsprechend der Erfindung ein Polyurethanharz oder ein Polyurethanharzgemisch mit einem überwiegenden Polyurethananteil sein bzw. auch ein Polyurethan-Schaum. Ebenfalls kann es sich um ein Epoxidharz bzw. ein Epoxidharzgemisch mit einem überwiegenden Epoxidharzanteil handeln.

Sowohl Polyurethan- als auch Epoxidharzverbindungen polymerisieren durch Polyaddition, die bei den (in der Regel vorpolymerisierten) Gießharzen durch die Mischung der Polymerkomponente mit ihrer entsprechenden Härterkomponente im entsprechenden Verhältnis ausgelöst wird.

Beim Mischen der Polymer- und Härterkomponenten vorzugsweise durch Rühren werden ungünstigerweise Luftblasen in das Polymer eingetragen, die unter Vakuum entgast werden müssen. Nach dem Auftrag des Polymers auf die digitalbildtragende Haftschicht ist es oft nochmals erforderlich, entstandene Luftblasen durch Vakuum zu entfernen. Bis die Bildaufnahmeschicht vollständig ausgehärtet ist, sollte die darunter liegende Haftschicht horizontal ohne Neigung bereitstehen, um eine gleichmäßige Dicke der auspolymerisierenden Schicht zu gewährleisten.

Während der Aushärtung der Bildaufnahmeschicht sollte der Raum relativ frei von umherfliegenden Staubpartikeln sein, da diese sich sonst auf die glatte, der Haftschicht abgewandten Oberfläche aufsetzen und diese verunreinigen könnten. Es ist hilfreich ,aber nicht zwingend erforderlich, durch eine Schablone die digitalbildtragende Haftschicht zu begrenzen und ein Auslaufen des noch flüssigen Polymers zu verhindern.

Die Tropfzeiten von Polyurethankunststoffen liegen in der Regel bei 20 Minuten, die Aushärtezeiten bei zwei Stunden. Durch bestimmte Additive können diese Zeiten erheblich verkürzt werden, was besonders im industriellen Rahmen von Bedeutung ist. Die Tropfzeiten von Epoxidharzen sind kürzer, ihre Aushärtezeit beträgt eine Stunde, kann aber auch weiter verkürzt werden.

Nachdem der Kunststoff ausgehärtet ist, kann der Träger von der nun mit der Bildaufnahmeschicht verbundenen Haftschicht durch Peelen entfernt werden. Falls Bild und Haftschicht nicht wasserlöslich sind, kann dieser Kunststoff der weiteren Verarbeitung zugeführt werden, etwa dem Zuschneiden oder Zustanzen und anschließender thermoplastischer Umformung, solange das Polymer nicht vollständig ausgehärtet ist oder es sich um thermoplastische Polyurethane (TPU) handelt.
Falls wasserlösliche Tinten und eine hydrophile Haftschicht verwendet wurden, ist eine zweite Polymerschicht (Grundschicht) auf der vom Träger freigelegten Seite vorteilhaft, um diese vor Feuchtigkeit zu schützen. Diese Polymerschicht wird in gleicher Weise wie schon die erste Polymerschicht aufgebracht. Eine zweite Polymerschicht gleichen Kunststofftyps ist vorteilhaft, da es bei mechanischen, thermischen oder anderen Belastungen nicht zu Materialspannungen oder zu mangelhafter Verbindung an der Grenzfläche der beiden Schichten kommt. Allerdings sind Polymerkombinationen möglich. Bei der Herstellung von Blends sollte aber darauf geachtet werden, dass verwendete Kunststoffarten ähnliche Eigenschaften aufweisen.

Nach dem Aufbringen einer zweiten schützenden Schicht kann der Formkörper ebenfalls einer Weiterverarbeitung zugeführt werden.

Polyurethankunststoffe sind sehr vielseitig in ihren Eigenschaften, die von thermoverformbar über fest-elastisch bis stahlhart reichen. In der Regel können feste Kunststoffe aus Polyurethan noch viele Stunden bis einige Tage nach dem Aushärten gedehnt, verdrillt, gebogen oder anderweitig verformt werden, bevor die Aushärtung vollständig abgeschlossen ist. Durch ein Nachsintern bei 80° C kann die Aushärtung schon früher erreicht werden.

Epoxidharze bilden feste Kunststoffe, die in der Regel nicht thermoverformbar sind.

Es ist problemlos möglich, Digitalbilder tragende Polyurethankunststoffe räumlich zu komplizierten Ebenen plastisch zu verformen und dieses Gebilde anschließend durch erneutes Eingießen in Polyurethan (oder einen geeigneten Stoff) zu einem äußerst komplexen, aber werkstofflich homogenen Gegenstand zusammenzufügen.

Es ist möglich, spezifische Bildinformationen eines Bildes auf mehrere, übereinander liegende Kunststoffebenen aufzuteilen und dadurch eine räumliches Bild mit einem 3D-Charakter zu erzeugen.

Die Erfindung wird anhand folgender Ausführungsbeispiele näher erläutert.

### Beispiel 1:

Herstellung eines festen, thermoverformbaren Kunststoffs mit Digitalbild:
A) Kunststoff mit fixiertem Digitalbild und zweiter Polymerschicht auf der Rückseite des Digitalbildes:
   Zunächst wird das Digitalbild richtigseitig auf eine Haftschicht, die einer temporären Polyesterträgerfolie aufliegt, übertragen. Die benutzte Polyesterträgerfolie ist eine einseitig beschichtete Trägerfolie F02 für Inkjetdrucker der Firma Geha. Das mit einem Tintenstrahldrucker mittels wasserlöslicher Tinten gedruckte Bild muss zunächst mit Heißluft getrocknet werden. Der Rand der temporären Trägerfolie wird durch eine Schablone begrenzt, um ein Auslaufen des flüssigen Kunststoffs zu vermeiden.
   Als Kunststoff wird das Polyurethan Biothan1784s und dessen Härter Biodur330 der Firma Alpina GmbH verwendet. Das Polymer bleibt transparent und wird nicht eingefärbt. Um einen festen Kunststoff zu erhalten, werden Polyurethankomponente und Härterkomponente in einem Verhältnis von 1:2 verrührt. Dabei werden ungünstigerweise Luftblasen eingetragen. Vor dem Ausgießen auf die Haftschicht des temporären Trägers (Unterlage) muss das Gemisch unter Vakuum entgast werden. Dazu wird ein Vakuumgefäß und eine Vakuumpumpe (2mbar) genutzt. Nach dem Ausgießen des noch nicht vollständig auspolymerisierten Polyurethangemisches auf der digitalbildtragenden Haftschicht erfolgt eine weitere Entgasung durch Vakuum mittels einer Vakuumkammer und einer Vakuumpumpe (0,2mbar). Es ist auch möglich, nur diese zweite Entgasung vorzunehmen und den ersten Entgasungsschritt auszulassen.
      Während der Auspolymerisierung der Bildaufnahmeschicht ist es wichtig, die Unterlage auf einer völlig planen, nicht geneigten Fläche aufzubewahren, damit die Bildaufnahmeschicht beim Aushärten eine gleichmäßig starke Ebene ausbildet. Außerdem sollte die Oberfläche vor umherfliegenden Staubpartikeln geschützt werden, um Verunreinigungen zu vermeiden.
      Das Aushärten dieses Polyurethangemisches benötigt eine Zeit von ca. zwei Stunden. Danach ist der temporäre Polyesterträger durch Peelen von dem mit der Bildaufnahmeschicht vernetzten digitalbildtragenden Haftschicht ablösbar. Dazu wird der Kunststoff gewendet und der Träger wird abgepeelt. Die so entstandene Bildaufnahmeschicht mit Digitaldruck wird als Vorderseite eines Kunststoffgegenstandes genutzt.
      Das Digitalbild liegt vernetzt im Makromolekül der Kunststoffakzeptorschicht vor. Es kann jeder Verformung folgen und reißt nicht bei Dehnung. Es ist extrem wischfest, aber noch feuchtigkeitsempfindlich. (Bei Verwendung nicht wasserlöslicher Tinten und anderer Haftschicht kann das Digitalbild auch feuchtigkeitsunempfindlich vorliegen.)
      Die zweite, auf die durch das Peelen des temporären Trägers freigelegte Seite des Digitalbilds aufgetragene Schutzschicht besteht vorzugsweise aus dem gleichen, wie oben verwendeten Polyurethangemisch. Das Polymer kann vorzugsweise mit der Farbe Weiß eingefärbt werden oder aber auch mit einer anderen farbe oder das Polymer kann auch transparent bleiben. Dieses wird vor seinem Auftrag auf das Digitalbild unter Vakuum entgast. Nach dem Aufgießen erfolgt ebenfalls eine Entgasung unter Vakuum, wobei auch hier die Möglichkeit besteht, nur den zweiten Entgasungsschritt vorzunehmen und den vorherigen Entgasungsschritt auszulassen. Um ein Auslaufen des Kunststoffs zu vermeiden, werden auch hier die Ränder durch eine Schablone begrenzt, bevor die zweite Kunststoffschicht eingegossen wird. Auch hier dauert das Aushärten des Kunststoffs ca. zwei Stunden, in denen die Oberfläche möglichst vor Staubeintrag geschützt werden sollte.
      Durch die Verwendung von Additiven im Polyurethangemisch kann die Auspolymerisierungszeit des Polymers erheblich verkürzt werden.
      Bei allen Verarbeitungsschritten, in denen mit nicht ausgehärteten Polyurethangemischen gearbeitet wird, ist für eine entsprechende Entlüftung der entstehenden gesundheitsschädigenden Gase zu sorgen.
      Nachdem die zweite Kunststoffschicht ausgehärtet ist kann das Werkstück weiterverarbeitet werden, beispilsweise durch Stanzen, Sägen oder Schneiden und Verformen. Biothan 1784s ist gut thermoverformbar in einem Zeitraum bis zu zwei Wochen nach Erhärten des Polymers. Durch ein Nachsintern bei 80° C kann die völlige Aushärtung beschleunigt werden.
      Nutzbar sind solche Kunststoffe mit integriertem Digitalbild beispielsweise im Designbereich zur Herstellung von Modeartikeln wie Handtaschen oder anderen Designverschalungen oder auch bei Gegenständen des täglichen Gebrauchs, bei denen beide Seiten des Kunststoffs den Belastungen von außen ausgesetzt sind.
B) Kunststoff mit fixiertem Digitalbild ohne zweite Schutzschicht:
   Die Herstellung eines solchen Kunststoffes erfolgt analog zu A), bis das Digitalbild vernetzt in der oberen Kunststoffakzeptorschicht vorliegt. Bei manchen Anwendungsgebieten reicht es aus, dass das Digitalbild von der Oberseite her geschützt ist und ein Schutz gegen Feuchtigkeit (bei Tintenstrahldrucken) an der Unterseite des Digitalbildes ist konstruktionsbedingt nicht notwendig. Ein solches Beispiel wäre die Verkleidung eines Computers, beispielsweise eines Macinthosh, oder andere transparente oder nicht transparente Verkleidungen von Geräten und anderen Gegenständen. Weitere Anwendungsgebiete liegen bei der Herstellung von Furnieren.
C) Kunststoff auf einer Grundschicht:
   Die Herstellung eines solchen Kunststoffs erfolgt analog zu A). Allerdings ist die Unterlage der Haftschicht ein ständiger Träger (Grundschicht) und besteht vorzugsweise aus dem gleichen Material Biothan 1784s oder einem Material mit ähnlichen Eigenschaften. Allerdings sind auch andere Materialkombinationen möglich. Die ständige Trägerschicht schützt das in der Bildaufnahmeschicht eingebettete Digitalbild gegen Feuchtigkeit und kann ebenfalls thermoplastisch umgeformt werden. Anwendungsgebiete sind beispielsweise die Herstellung von Handyschalen oder auch von Modeartikeln oder Artikeln des täglichen Bedarfs.
   Die unter Beispiel 1 hergestellten Kunststoffe haben unter anderem den Vorteil, dass teure Spritzgussverfahren umgangen werden können.

### Beispiel 2:

Herstellung eines weichen, biegsamen Kunststoffs mit fixiertem Digitalbild:
A) Kunststoff mit fixiertem Digitalbild und zweiter Polymerschicht auf der Rückseite des Digitalbildes:
   Die Prozedur der Herstellung erfolgt wie unter Beispiel 1 beschrieben. Um einen weichen, biegsamen Kunststoff zu erhalten, wird ein Gemisch der Polyurethankomponente Biothan 1784s und seiner Härterkomponente Biodur 330 im Verhältnis 1:1 hergestellt. Alternativ ist ebenfalls ein Gemisch der Polyurethankomponente Biothan 1770 und seiner Härterkomponente Biodur 330 im Verhältnis 1:1 möglich. Alle Komponenten sind bei der Firma Alpina GmbH erhältlich. Die Aushärtungszeit des Kunststoffes ohne zusätzliche aushärtungsbeschleunigende Additive liegt bei ca. einer Stunde.
      Diese Kunststoffgemische sind nach dem Aushärten etwas stärker an den temporären Polyesterträger gebunden. Um diesen fehlerfrei entfernen zu können, muss der Kunststoff mit temporären Träger auf ca. 8°C bis 4° C gekühlt werden. Danach lässt sich der Träger durch Peelen vom der in der Kunststoffakzeptorschicht vernetzten digitalbildtragenden Haftschicht entfernen. Bei der Verwendung wasserlöslicher Druckertinten ist auch hier eine zweite, auf die durch das Peelen des temporären Trägers freigelegte Seite aufgetragene Schutzschicht, vorzugsweise aus dem gleichen Polyurethangemisch wie oben beschrieben, vorteilhaft.
      Der so hergestellte Kunststoff mit integriertem Digitalbild ist stark biegsam. Bei Verwendung von Biothan1784s ist der Kunststoff zusätzlich auch leicht dehnbar, was die Verwendung von Biothan1770 nicht ermöglicht. Der vorliegende Kunststoff kann anschließend gestanzt, gesägt, geschnitten usw. werden, er kann auch auf flexible Flächen wie z.B. Stoffe oder Leder verklebt werden. Anwendungsgebiete finden sich im Design, als Schutzschichten oder bei Artikeln des täglichen Bedarfs und in der Schuindustrie oder auch bei der Herstellung von iPod-Hüllen.
B) Kunststoff mit fixiertem Digitalbild ohne zweite Schutzschicht:
   Dieser Kunststoff wird analog zu A) hergestellt, ohne eine zweite Schutzschicht aufzutragen.
      Anwendungsgebiete sind ähnlich gelagert. Besonders vorteilhaft für diese Kunststoffe ist die Verklebung mit Stoff, Leder oder anderen Materialien. Aber auch Anwendungsgebiete, in denen eine geringe Elastizität gefordert ist, sind denkbar.
C) Kunststoff auf einer Grundschicht (ständiger Träger):
   Diese Kunststoff wird analog zu A) hergestellt, nur dass eine Grundschicht verwandt wird, der vorzugsweise aus dem gleichen bereits verwendeten Material besteht oder
   aus einem ähnlichen Material mit ähnlichen Eigenschaften. Eine andere Materialkombination wird aber nicht ausgeschlossen.

Diese Grundschicht ist ebenfalls biegsam und gegebenenfalls leicht dehnbar. Durch ihn wird die Unterseite des Digitalbildes gegen Feuchtigkeit geschützt. Anwendungsgebiete liegen ähnlich wie bei A) und B).

### Beispiel 3:

Herstellung eines weichen, biegsamen und dehnbaren Kunststoffs mit fixiertem Digitalbild:
Die Prozedur der Herstellung erfolgt wie unter Beispiel 1 beschrieben. Als Haftschicht dient eine reine Cellulose-2-acetat-Schicht (Gewichtsanteile 99,5%) mit anionischen Tensiden (Gewichtsanteile 0,5%), die in Aceton gelöst und auf eine Unterlage aufgebracht wurde. Nach Abdampfen des Acetons ist die Haftschicht bedruckbar. Cellulose-2-acetat und anionische Tenside wurden bezogen von Firma Carl Roth GmbH, Karlsruhe.

Für einen Kunststoff mit diesen Eigenschaften wird ein Polyurethan/Silicongemisch im Verhältnis 3:1 hergestellt. Zunächst wird das Polyurethangemisch aus der Polyurethankomponente Biothan 1784s und ihrer Härterkomponente Biodur 330 im Verhältnis 1:1 hergestellt.

Als Siliconkomponente wird das Silicon Köraform A42 verwendet, da es im Gegensatz zu vielen anderen Siliconen transparent ist. Die Siliconkomponente wird mit ihrer Härterkomponente im Verhältnis 1:10 gemischt. Polyurethangemisch und Silicongemisch werden anschließend im Verhältnis 3:1 gemischt und unter Vakuum entgast. Das Gemisch zeigt viskosere Eigenschaften als seine einzelnen Komponenten und muss auf dem temporären Träger (Unterlage) ausgestrichen werden. Dabei ist die Möglichkeit des erneuten Einbringens von Luftblasen geringer als bei flüssigeren Gemischen. Eine Entgasung unter Vakuum nach dem Verstreichen ist aber trotzdem noch sinnvoll. Die Entgasung direkt nach dem Mischen der Polyurethan- und Siliconkomponenten ist hier unbedingt erforderlich und kann nicht wahlweise entfallen (wie bei Beispiel 1 und 2), weil das Kunststoffgemisch durch seine Viskosität verhältnismäßig schwerer zu entgasen ist.
Alle Komponenten sind bei der Firma Alpina GmbH erhältlich.
Die Aushärtezeit des Copolymergemisches liegt ohne zusätzliche Additive bei ca. einer Stunde. Allerdings ist es vorteilhafter, das Peelen der temporären Polyesterträgerfolie von der in der Kunststoffakzeptorschicht vernetzten digitalbildtragenden Haftschicht erst ca. 3 - 4 Stunden nach dem Auspolymerisieren und bei 4°C durchzuführen.

Der so hergestellte Kunststoff mit integriertem Digitalbild ist weich, stark biegsam und elastisch dehnbar. Das Digitalbild folgt bei elastischer Dehnung der Bewegung des Kunststoffs und geht beim darauffolgenden Zusammenziehen des Kunststoffs in seine Ausgangsposition zurück, ohne Risse zu zeigen. Auch im gedehnten Zustand ist das Bild so gleichmäßig und fein gedehnt, dass keine Unebenheiten oder Fehler erkennbar sind.

Der vorliegende Kunststoff kann anschließend gestanzt, gesägt, geschnitten usw. werden. Ein Verkleben mit stofflich qualitativ gleichen oder ähnlichen Komponenten ist möglich.
Die Stärke der Dehnbarkeit hängt von der Zusammensetzung der Stoffe ab. Der limitierende Faktor für die gleichmäßige, fehlerfreie Dehnbarkeit des Digitalbildes liegt beim Kunststoff selbst. Mögliche Anwendungsgebiete liegen beispielsweise in der elastischen Ummantelung von Gegenständen oder in der Bekleidungsindustrie.

### Beispiel 4:

Herstellung eines Polyurethanschaums mit fixiertem Digitalbild:
Die Herstellung eines Polyurethanschaums mit abriebfestem Digitalbild erfolgt zunächst auf die gleiche Weise wie die Herstellung des Polyurethan / Silkon - Copolymers unter Beispiel 3. Diesem Copolymergemisch werden in hohem Maße Lufteinschlüsse (Luftblasen) durch Rühren eingebracht. Alternativ dazu und besonders in industriellem Rahmen können Gasbildende (meist CO2-entwickelnde) Zusatzstoffe dem Copolymergemisch zugeführt werden.
Das hier verwendete unter Beispiel 3 beschriebene Polyurethan-/Silicongemisch besitzt so viskose Eigenschaften, dass die eingetragenen Luftblasen bis zur Auspolymerisierung eingeschlossen bleiben und es zur Ausbildung eines homogenen Polyurethanschaumes kommt.
Um dem Schaum eine gleichmäßige Schichtdicke zu verleihen, ist es vorteilhaft, Ober- und Unterseite durch eine digitalbildtragende Haftschicht auf einer temporären Trägerfolie zu begrenzen. Die Polymerisierungszeit beträgt ca. eine Stunde. Der temporäre Polyesterträger ist ebenfalls ca. 3 - 4 Stunden nach dem Auspolymerisieren vorzugsweise bei 4°C durch Peelen entfernbar.
Das vernetzte Digitalbild liegt in guter Qualität vor, da Polyurethanschäume die Neigung besitzen, an ihren Oberflächen (Ober- sowie Unterseite) eine dünne homogene stofflich gleich beschaffene (keine Entmischungen) Schicht ohne Gasblasen auszubilden, so dass das vernetzte Digitalbild in der Regel nicht durch Unebenheiten gestört wird.

### Beispiel 5:

Herstellung eines festen, nicht thermoverformbaren Kunststoffs mit fixiertem Digitalbild:
Ähnlich wie unter Beispiel 1 beschrieben kann (statt aus Polyurethankomponenten) ein fester Kunststoff mit eingebettetem Digitalbild aus Epoxidharzen hergestellt werden. Dazu wird analog zu Beispiel 1 eine vorpolymerisierte Epoxidharzpolymerkomponente mit ihrer entsprechenden Härterkomponente im Verhältnis 1:1 gemischt. Beide Komponenten sind bei Modulor käuflich erhältlich. Die Auspolymerisierung dauert ca. 30 Minuten. Anschließend kann die Unterlage von der in der Bildaufnahmeschicht eingebetteten und fixierten digitalbildtragenden Haftschicht durch Peelen bei Raumtemperatur entfernt werden. Das Digitalbild ist ausgesprochen stark im Epoxidharzmakromolekül vernetzt. Epoxidharze lassen sich nicht thermoplastisch verformen. Sie finden beispielsweise Anwendung im Formenbau, unter anderem auch im Bootsbau oder im Modellbau.

### Beispiel 6:

Herstellung eines Kunststoffs mit einer dreidimensionalen Bildstuktur:
Als Haftschicht dient eine Schicht aus Cellulose-2-acetat (60% Gewichtsanteile), Polymethylmethacrylat (PMMA, 39,5% Gewichtsanteile) und anionischen Tensiden (0,5% Gewichtsanteile). Cellulose-2-acetat und anionische Tenside wurden von der Firma Car Roth GmbH, Karlsruhe, bezogen. PMMA wurde von Modulor, Berlin, bezogen. Die Komponenten wurden gemeinsam in Aceton gelöst und auf eine Unterlage aufgebracht. Nach dem Abdampfen des Acetons ist die Haftschicht bedruckbar.

Um ein dreidimensionales Digitalbild im Kunststoff zu erzeugen, ist erforderlich, die Bildinformation auf verschiedene aufeinander folgende Ebenen aufzuteilen. Jede Ebene trägt eine eigene explizite Bildinformation. Zusätzlich können spezielle Effekte herbeigeführt werden wie z.B. ein Lupeneffekt oder ähnliches. Beispielsweise kann eine Digitalfotografie für eine Galerie dreidimensional und mit Effekten in diversen Kunststoffebenen verankert werden. Weitreichende Anwendungsgebiete finden sich besonders bei der Herstellung von räumlich wirkenden Furnieren, beispielsweise für die Autoindustrie, im Schiffbau, im Flugzeugbau oder sonst in der Möbelindustrie.

Die einzelnen Kunststoffebenen mit Digitalbild werden zunächst wie unter Beispiel 1 hergestellt. Die Herstellung erfolgt vorzugsweise mit Hilfe einer Polyesterunterlage mit Haftschicht, kann aber auch mit Hilfe eines ständigen Trägers (Grundschicht) erfolgen. Die einzelnen Schichten können parallel zueinander hergestellt werden und auch bedingt zwischengelagert werden. Es bietet sich an, alle erforderlichen Furnier- oder Bildebenen nacheinander in einem Arbeitsgang mit der bereits verwandten Polymerkomponente untereinander zu einer homogenen Schicht zu verkleben. Nach dem Auspolymerisieren kann die Polymerschicht mit dem dreidimensionalen, auf mehrere Ebenen aufgeteilten Digitalbild weiterverarbeitet werden, beispielsweise durch zurechtsägen und thermoplastische Umformung oder ähnliches.

### Beispiel 7:

Herstellung eines dreidimensionalen, komplex aufgebauten Gegenstandes, der auf vielen verschiedenen Ebenen in unterschiedlichen Ausrichtungen vorliegende Digitalbilder beinhaltet:
Es wurde die Haftschicht aus Beispiel 6 benutzt.
Besonders im Designbereich z.B. in der Möbelindustrie, im Modellbau oder auch in anderen Bereichen liegen die Anwendungsbereiche für solche komplex aufgebauten Gegenstände, die optisch mit der Dreidimensionalität spielen.

Die unter Beispiel 1 hergestellten Kunststoffe mit Digitalbild, vorzugsweise als Einzelschicht ohne die zweite Schutzschicht (mit zweiter Schicht ist möglich), können zunächst verdrillt, plastisch gedehnt, gebogen oder anderweitig verformt werden. Dadurch gelangt das Digitalbild in eine Reihe verschiedener Ebenen mit unterschiedlicher Ausrichtung. Dieses so erzeugte Gebilde kann erneut in einen qualitativ gleichen (oder ähnlichen) Kunststoff eingegossen und zu einem neuen, komplex aufgebauten dreidimensionalen Gegenstand aufgebaut werden.
Auch dieser Kunststoffgegenstand kann weiter verarbeitet werden.

Patentierte Stoffverbundsysteme sind zwar auch dreidimensional faltbar, können aber wegen auftretender Materialspannungen nicht in gleicher Weise dreidimensional verformt werden, besonders Dehnungen und Verdrillungen sind bei ihnen kritisch. Außerdem ist das erneute Vergießen in Kunststoff aus optischen Gründen nicht möglich.

Andere patentierte Übertragungsverfahren von Digitalbildern auf Kunststoff zeigen ebenfalls limitierte Möglichkeiten der Verformung, da die so übertragenen Digitalbilder nur mittelbar auf der Kunststoffoberfläche haften und sich beispielsweise bei Dehnung lösen würden.
Außerdem führt die Verwendung stofffremder Haftschichten (durch Sublimation übertragener, andersartiger Kunststoffschichten) bei erneutem Eingießen ebenfalls zur Inomogenität des Kunststoffs und zu optischen Störungen.

### Beispiel 8:

Herstellung eines dreidimensionalen Bildes:
Als Haftschicht dient ein Copolymerisat von gelatinehaltigen Polyolen (20% Gewichtsanteile) und Polyurethan (20% Gewichtsanteile), erhalten durch die Polymerisation von Polyisocyanaten (Härter 60% Gewichtsanteile).
Als Polyurethan wurde Biothan 1784s der Firma Alpina GmbH verwendet, der isocyanathärter Biodur330 wurde ebenfalls von der Firma Alpina GmbH bezogen. Gelatinehaltige Polyole sind derzeit nicht im Standardangebot des Chemikalienhandels erhältlich und deren Herstellung muss speziell in Auftrag gegeben werden. Nach der Polymerisation ist die Haftschicht bedruckbar, wenngleich die wasserlösliche Tinte/Farbe einige Zeit zum Trocknen braucht.

Diese Haftschichten benötigen keine Unterlage, da sie an sich genügend Stabilität besitzen.

Um ein dreidimensionales Bild im Kunststoff zu erzeugen, ist erforderlich, die Bildinformation auf verschiedene aufeinander folgende Ebenen aufzuteilen. Jede Ebene trägt eine eigene explizite Bildinformation, die zu einem dreidimensionalen Eindruck beiträgt. Zusätzlich können spezielle Effekte herbeigeführt werden wie z.B. ein Lupeneffekt oder Weitwinkel- bzw. Zoomeffekte. Beispielsweise kann eine Digitalfotografie für eine Galerie so dreidimensional und mit Effekten in einer Kunststoffschicht verankert werden, dass der Betrachter den Eindruck bekommt, das Bild würde ihn in sich hineinziehen.

Für solche Objekte bietet sich die Verwendung von Kunststoffen aus der Klasse der Duroplaste an, da die entstandenen mehr oder weniger dünnen Kunststoffplatten auch größere Flächenausmaße erreichen können und dabei sehr stabil bleiben. Aufgrund der guten optischen Eigenschaften und der durch Zusätze erzielten UV-Resistenz von PUR - Verbindungen ist die Nutzung solcher Kunststoffe sehr vorteilhaft.

Die einzelnen Kunststoffschichten mit Digitalbild werden zunächst durch das hier beschriebene Verfahren hergestellt. Die verschiedenen bildtragenden ebenen können zeitgleich hergestellt und dann in einem Schritt nacheinander mit Hilfe des verwendeten Polymers miteinander verbunden werden. Letztendlich ist wichtig, dass die entstandene Kunststoffschicht stofflich homogen vorliegt, um keine optischen Störungen zu erzeugen.

### Beispiel 9:

Herstellung von Handyschalen:
Bei diesem Beispiel werden vorzugsweise thermoplastisch verformbare Kunststoffe (PP, PE, PVC) oder aber auch Polycarbonat (PC) und Polyurethan (PUR) eingesetzt. Zur Produktion von Handyschalen eignet sich besonders die Verwendung von ständigen Trägern, die hier als dünne Folie vorliegen. Ihr Vorteil liegt dabei im einfachen, schnellen Prozessablauf. Der ständige Träger stellt die spätere Unterseite dar und schützt den Digitaldruck vor äußeren Einflüssen. Auf ihn wird die Haftschicht mit dem entsprechenden Bindemittel aufgebracht.

Als Haftschicht dient eine Schicht aus Methylcellulose (40% Gewichtsanteil) und Kunststoffpulver (PP, PE, PVC, andere mit einer Partikelgröße von ca. 50 µm, 60% Gewichtsanteil). Die Methylcellulose wird zunächst in Wasser gelöst, das Kunststoffpulver wird eingearbeitet. Die Methylcellulose ist bei Firma Carl Roth, Karlsruhe, erhältlich. Das Kunststoffpulver muss in Lohnmahlung hergestellt werden. Das Gemisch wird auf den ständigen Träger (die Unterlage) aufgebracht und getrocknet. Danach ist die Haftschicht bedruckbar. Nach der Bedruckung wird auf die Haftschicht eine Kunststoffschicht von ca. 200 - 300 µm extrudiert. Durch die Hitzeentwicklung kommt es zu einer Verschmelzung des Bildes mit der aufgetragenen, dickeren Kunststoffschicht. Aus den so entstandenen Platten werden die Formen für die Handyschalen ausgestanzt und thermoplastisch umgeformt zur endgültigen Form. Obwohl auch hier die Erzeugung eines Schließmechanismus für die Schale einen zusätzlichen Aufwand bedeutet, ist dieses Verfahren eine Alternative zum teuren Spritzgussverfahren, besonders, wenn es sich um individuelle, kleinere Auflagen handelt.

Alternativ zu der oben beschriebenen Haftschicht können auch Schichten aus Copolymerisaten von Cellulose-2-acetat mit thermoplastischen Kunststoffpolymeren genutzt werden. Weiterhin einsetzbar ist die Haftschicht aus Beispiel 6.

### Beispiel 10:

Herstellung eines hochwertigen Furniers mit 3D Effekt für die Möbelindustrie, Konsolen und Auskleidungen in der Autoindustrie, Lifestyle- und Designerzeugnisse oder Verkleidungen für technische Geräte:
Das Furnier setzt sich aus einer Reihe verschiedener aufeinander folgender Bildaufnahmeschichten mit jeweils unterschiedlichen Bildinformationen zusammen. Diese Bildinformationen können farblich oder in der Form differieren, sie können transparent, lumineszent oder undurchsichtig sein, sie können schrille Farbtöne enthalten oder gedeckte Farben, sie können innerhalb einer Schicht die optischen Eigenschaften wechseln oder über mehrere Schichten hinweg Musterüberlappungen hervorrufen und vieles mehr. Das Zusammenspiele all dieser Faktoren führt zur Fertigung eines Kunststoff - Furniers mit völlig neuen Designmöglichkeiten, die das Erscheinungsbild eines Gegenstandes extrem hervorheben können, die aber auch natürlich vorkommende Designvorbilder wie z.B. Wurzelholzfurnier lebensecht nachzugestalten und einen Luxusanschein zu vermitteln vermögen.

Nutzbare Kunststoffe für Furniere sind einerseits Polyurethane, soweit sie sich zumindest in begrenztem Maße noch thermoplastisch verformen lassen. Aber auch viele andere Kunststoffklassen sind möglich. Polyurethane besitzen gute optische Eigenschaften und sind mit entsprechenden Zusätzen UV-resistent.

Die im beschriebenen Verfahren hergestellten Bildübertragungsschichten können zeitlich parallel hergestellt werden und in einem Arbeitsschritt nacheinander vorzugsweise mittels verwendeten Polymers miteinander verbunden werden.

Anschließend können die Furniere durch Sägen, Stanzen, etc. und thermoplastische Umformung ihre endgültige Form erhalten.

Als Haftschichten können der Verarbeitung entsprechend die Haftschichten aus den Beispielen 3, 6, oder 8 eingesetzt werden.

### Beispiel 11:

Herstellung einer elastisch biegsamen i-Pod-Schutzhülle mit fixiertem Bild:
Für dieses Verfahren wird ein ständiger transparenter Träger aus Silicon verwendet, der später als Außenhaut dient. Da Silicon von Natur aus selbsttrennende Eigenschaften besitzt, muss eine Haftschicht verwendet werden, die mit den CH3-Gruppen des Silicons reagieren kann, hierzu werden Additive (SDS) zugesetzt. Zunächst wird eine Haftschicht hergestellt, die dementsprechende Ionen aufweist. Als Haftschicht dient ein elastomeres Polymer auf Gelatinebasis. Eine Schmelzlösung von Gelatine mit Wasser, Glycerin und Natriumaurylsulfat (SDS) wird zunächst auf eine später abtrennbare Unterlage aufgebracht und getrocknet. Die Zusammensetzung besteht aus Gelatine (80% Gewichtsanteile), Glycerin (10% Gewichtsanteile) und SDS (10% Gewichtsanteile). Anschließend wird eine flüssige Siliconschicht aufgetragen und auspolymerisiert. Zwischen den Methylgruppen des Silicons und dem starken Anion des SDS entstehen Wasserstoffbrückenbindungen, die die Haftschicht im Silicon verankern. Die Unterlage wird entfernt und die dadurch freigelegte Haftschicht ist bedruckbar.

Aus dieser Folie (bestehend aus transparentem Siliconträger und Haftschicht) werden nach Bedruckung Formen für die Weiterverarbeitung zu iPOD-Hüllen herausgestanzt. Die iPOD-Hüllen werden im In-Mold-Sprüzgussverfahren hergestellt. Dazu wird die ausgestanzte Folie mit der bedruckten Seite nach innen zeigend in die Spritzgussform eingelegt. Beim Spritzguss erfolgt während des Auspolymerisierens ebenfalls eine Verankerung der Haftschicht mit der inneren Siliconschicht aufgrund starker Wasserstoffbrückenbindungen.

Gelatine, Glycerin und SDS sind erhältlich bei Firma Carl Roth, Karlsruhe. Silicon und Härter (ALPA-SIL) sind erhältlich bei Alpina GmbH.

### Beispiel 12:

Herstellung einer dehnbaren Latexschicht mit fixiertem Digitaldruck für die Bekleidungsindustrie und andere Anwendungsgebiete:
Bisherige Digitaldrucke auf dehnbaren Latex-beschichteten Stoffen zeigen kein gutes Haftverhalten. Besonders an stark beanspruchten Stellen kommt es schnell zu Abrieb. Das hier dargestellte Verfahren gibt dem fixierten Digitalbild besonders auch auf elastischen und dehnbaren Polymeren festen Halt. Das so fixierte Digitalbild ist genau wie das Polymer selbst dehnbar und geht nach Beendigung der Dehnung mit dem Polymer zusammen in seine Ausgangsposition zurück.

Als Haftschicht dient eine Schicht aus Methylcellulose. Diese wird zunächst in Wasser gelöst und auf eine ablösbare Unterlage (z.B. Polyester) aufgebracht. Methylcellulose ist erhältlich bei Firma Carl Roth, Karlsruhe. Nach Trocknung ist die Haftschicht bedruckbar. Die Bildaufnahmeschicht wird als noch flüssiges Latexgemisch aufgebracht und in der Regel durch Wasserentzug oder durch andere Verfahren verfestigt. Die Unterlage wird entfernt. Die so entstandene Latexschicht mit fixiertem Digitalbild kann bereits weiterverarbeitet werden, beispielsweise durch das Verkleben mit einem elastischem Stoff.

Auf die Bildaufnahmeschicht kann aber auch rückseitig eine weitere Latexschicht als Grundschicht aufgetragen werden.
Um ein eventuelles Verlaufen wasserlöslicher Tinten/Farben beim Eindringen der Latexmilch zu verhindern, kann auch zunächst eine sehr dünne Latexschicht aufgetragen werden, die relativ schnell trocknet, ohne dass es zu einem Verlaufen kommt. Darauf ist eine dickere Latexschicht auftragbar.

### Beispiel 13:

Herstellung einer Getränkeflasche oder eines anderen Hohlkörpers mit fixiertem Bild in den Gefäßwänden:
Die Zusammensezung der Haftschicht ist abhängig vom verwendeten Kunststoff, aus dem der Hohlkörper gefertigt wird.
Bei einer Verarbeitung von Polymethylmethacrylat (PMMA) ist eine Haftschicht bestehend aus Cellulose-2-acetat (60% Gewichtsanteile), Polymethylmethacrylat (PMMA, 39,5% Gewichtsanteile) und anionischen Tensiden (0,5% Gewichtsanteile) nutzbar (siehe Beispie 6).
Bei einer Verarbeitung von Polyethylen (PE) oder Polypropylen (PP) eignet sich eine Haftschicht aus Polyethylenoxid. Polyethylenoxid kann thermoplastische Verbindungen zu anderen Thermoplasten eingehen und ist bedruckbar. Es kann bezogen werden bei Firma Carl Roth GmbH.

Das hier beschriebene Verfahren eignet sich in vorteilhafter Weise zur Herstellung von Getränkeflaschen oder anderer Hohlkörper mit fixiertem Dekor durch Blasformverfahren oder ähnliche Verfahren.

Die hierzu nutzbaren Kunststoffe gehören zur Klasse der thermoplastisch verformbaren Polymere. Ein oft verwendetes Polymer zur Herstellung von Getränkeflaschen für die Aufbewahrung von Trinkflüssigkeiten ist Polyethylen, das hier beispielhaft für viele dafür nutzbare thermoplastische Kunststoffe stehen soll. Die Kunststoffe Polyethylen (PE) und Polypropylen (PP) sind die meistgenutzten Kunststoffe bei der Herstellung von Trinkflaschen. Im Designbereich wird hingegen oft Polymethylmethacrylat (PMMA) verwendet. Viele andere Gebrauchsgegenstände werden aus Polyvinylchlorid (PVC) hergestellt. Diese Stoffe stehen stellvertretend für viele thermoplastisch verformbare Polymere, aus denen Getränkeflaschen oder andere Hohlkörper nach dem hier beschriebenen Beispiel hergestellt werden können.
A) Wenn relativ dünnwandige Gefäße hergestellt werden sollen, bietet sich an, einen ständigen Träger für die Haftschicht zu benutzen. Das Trägermaterial sollte vorzugsweise aus Polyethylen bestehen und als Folie einer bestimmten Dicke vorliegen. Darauf wird die Haftschicht mit dem entsprechenden Bindemittel aufgebracht, die auch das Digitalbild aufnimmt. Beim Aufbringen der Bildaufnahmeschicht in Form einer erhitzten Polyethylenschmelze ist es unter Umständen notwendig, die Trägerfolie kurzzeitig zu kühlen, um deren Schmelzen zu verhindern. Hierbei muss allerdings darauf geachtet werden, dass die aufgebrachte Polyethylenschmelze genügend Zeit erhält, um durch die Haftschicht diffundieren zu können. Auch die Haftschicht selbst sollte eine gewisse Schichtdicke aufweisen. Polyethylen besitzt wie andere thermoplastisch verformbare Kunststoffe keine Quervernetzungen. Deshalb ist die Ausbildung einer starken Diffusionsschicht außerordentlich wichtig, um das Digitalbild im Makromolekül qualitativ hochwertig zu verankern.
B) Wenn das Gefäß verhältnismäßig dicke Wände besitzt, bietet sich an, einen temporären Träger zu benutzen. Hier wäre ein Trägermaterial aus Polyester sinnvoll, da dieses hohe Temperaturen verträgt. Die Bildaufnahmeschicht in form einer erhitzten Polyethylenschmelze wird auf die Haftschicht aufgetragen. Auch hier ist es wichtig, dass die Haftschicht eine gewisse Schichtdicke aufweist und das Polymer vor dem Auspolymerisieren durch sie hindurchdiffundieren kann um eine gut ausgeprägte Diffusionsschicht zu erzielen. Nach dem Erstarren des Kunststoffs und dem Peelen des temporären Trägers wird auf die dadurch freigelegte Kunststoffoberfläche eine zweite Polyethylenschmelze aufgetragen.
C) Auf den ständigen Träger vorzugsweise aus Polyethylen wird die Haftschicht mit dem entsprechenden Bindemittel aufgetragen, die auch das Digitalbild aufnimmt. Darauf wird die spätere, noch unflüssige Bildaufnahmeschicht vorzugsweise als dickere Polyethylenfolie durch Laminieren oder andere Verfahren aufgetragen. In diesem Fall muss durch die anschließende Verarbeitung gewährleistet sein, dass genügend Energie zugeführt wird, um zwischenmolekulare Wechselwirkungen zwischen dem Bindemittel der Haftschicht und den Kunststoffschichten auszulösen.

Die unter A), B) und C) hergestellten Kunststoffe mit fixiertem Digitalbild können auf gleiche Weise weiterverarbeitet werden. Die Folien werden zunächst zu einem Schlauch entsprechenden Durchmessers positioniert und durch einen heißen Luftstrahl oder durch andere Techniken längs verschweißt. Dieser Schlauch wird dann im sogenannten Blasformverfahren zur Herstellung eines Vorformlings genutzt. Der aus dem Schlauch gefertigte Vorformling wird aus einem angeflanschten Werkzeug in ein formgebendes Blaswerkzeug gefördert. Anschließend wird ein Dorn von oben in den Schlauch eingeführt und durch ihn heiße Druckluft in den Schlauch gepresst. Der Schlauch wird aufgeblasen und der Form des Blaswerkzeugs angepasst. Dabei wird der Schlauch mit dem in ihm fixierten Digitalbild erheblich gedehnt. Das Digitalbild ist so im Makromolekül des Kunststoffs eingebettet, dass es der Dehnung homogen folgt. Allerdings muss beim Digitaldruck die Ausdehnung des Bildes berücksichtigt werden. Der Kunststoff erkaltet. Das Blaswerkzeug öffnet sich und die Flasche bzw. das Gefäß wird ausgeworfen.

Die so entstandenen Flaschen und andere Hohfgefäße besitzen einen Digitaldruck, der in die Innenseite des Kunststoffs integriert ist. Der im Makromolekül eingebaute Digitaldruck ist sowohl von der Innen- als auch von der Außenseite durch eine Kunststoffschicht geschützt. Der Digitaldruck kommt weder innen mit der in der Flasche/im Gefäß befindlichen Flüssigkeit in Kontakt, noch ist er von außen angreifbar. Durch diese Methode können völlig neue Designs zustande kommen. Andererseits ist ein Bedrucken oder das Ummanteln mit dekortragenden Folien nicht mehr notwendig.

Falls die Getränkeflaschen oder Hohlkörper einem Recycling zugeführt werden sollen, ist hier von Vorteil, dass keine Verbundsysteme vorliegen und die stofflich homogenen Gebrauchsgegenstände nicht durch zusätzliche Trennverfahren Mehrkosten verursachen.

### Beispiel 14:

Herstellung einer PET-Flasche mit blasformbarem Design:
PET-Flaschen in der Getränkeindustrie bestimmen immer mehr unseren Alltag. Sie werden im Blasformverfahren aus einem zuvor gefertigten Vorformling geblasen. Dabei wird die Kunststoffoberfläche extrem gedehnt. Bei Flaschen mit einem komplexen Formdesign entstehen zusätzlich komplizierte
Oberflächenstrukturen. Um diese Erzeugnisse trotzdem mit Bilddesigns, Schriftzügen und Marketingelementen versehen zu können, werden nach der Befüllung Banderolen und Aufkleber angebracht. Einige Banderolen werden aus Schrumpffolie hergestellt, die unter Temperatureinwirkung die darunterliegende Form nachbilden. Dies gelingt aber nur für sehr grobe Strukturen.
Eine andere Möglichkeit der Aufbringung eines Bilddesigns ist das Sleeven des Vorformlings mit einer Designfolie, die im anschließenden Blasformverfahren zusammen mit der Flasche aufgeblasen wird. Vorteilig für dieses Verfahren ist, dass das Design die gesamte Flasche einbezieht und sich auch kompliziertesten Strukturen formlich anpasst. Für diese Designfolien eignet sich das hier beschriebene Verfahren zur Fixierung von Bildern in Kunststoffen. Die Bilder sind problemlos dehnbar und die Gefahr eines Verlaufens ist sehr gering, weil die Farbpartikel selbst nicht schmelzen.

Einen weiteren Vorteil bietet die Anwendung dieses Verfahrens dadurch, dass die verwendeten Tinten/Farben in der Regel wasserlöslich sind. Bisherige Banderolen werden mit Kunststofffarben bedruckt. Da PET ein relativ teurer Rohstoff ist (Herstellung einer 1 Literflasche kostet ca. 12 Cent, davon 10 Cent PET-Kosten), gibt es Bestrebungen, im Recycling die Farbe aus den Banderolen wieder herauszulösen und das PET der Folie in den PET-Kreislauf zurückzuführen. Hierzu wird bisher Isopropanol benutzt. Bei Anwendung des Verfahrens der Fixierung von Bildern in Kunststoffen ist es möglich, die Farbe aus den Banderolen durch Waschen in Wasser herauszulösen.

Als Haftschicht dient eine Schicht aus Polyethylenoxid (PEO, 99% Gewichtsanteil) und anionische Tenside (1 % Gewichtsanteil). PEO ist bei Firma Carl Roth, Karlsruhe, erhältlich. Das Polymer und die Tenside werden zunächst in Wasser gelöst und als Schicht auf eine PET-Folie (Polyethylenterephthalat) aufgebracht. Nach dem Trocknen ist die Haftschicht bedruckbar. Die bedruckte Folie wird dann in Schlauchform mit dem Bild nach innen auf den Vorformling gesleevt, aus dem anschließend im Blasformverfahren die endgültige Flasche geblasen wird. Da PEO und PET ähnliche Schmelztemperaturen besitzen, ist das Dehnungsverhalten der Haftschicht dem Dehnungsverhalten der PET-Folie und des darunterliegenden PET-Vorformlings sehr ähnlich. Durch die Verarbeitungstemperaturen zwischen Fließ- und Schmelztemperatur wird außerdem ein Aneinanderschmelzen der Schichten erzielt.

Beim späteren Recycling können nach dem Schreddern der Flaschen die Haftschicht aus PEO sowie die darin befindlichen Farben mit Wasser ausgewaschen werden. Das PET ist dann frei von Haftschichtpolymer und frei von Farbe.

### Beispiel 15:

Herstellung einer aufbügelbaren Designfolie für Möbel, Lifestylegegenstände etc. oder als Set für den Heimwerkerbedarf:
Soweit es sich in der Möbelindustrie nicht um aufbügelbare Holzfurniere handelt, sind vor allem Oberflächendesigns vertreten, die zunächst auf Papier gedruckt und dann mit einer Kunststoffschicht überzogen werden. Diese Variante hat den Nachteil, dass das darunter liegende Möbelstück bereits seine endgültige Form erhalten haben muss, da sich die Kunststoff-Papier-Platte nur sehr bedingt verformen lässt. Vorteilhafter wäre (abgesehen von einer Kunststoffplatte mit eingebettetem Bild) das Aufbügeln einer bildtragenden Folie. Nach Verschmelzung der Platte mit der Folie lässt sich diese problemlos thermoplastisch weiter verformen. Auch sonst ist das Aufbügeln einer bildtragenden Folie auf einen Gegenstand eine weitere Anwendungsmöglichkeit des Verfahrens im Designbereich.
Da die Bedruckung der Haftschicht mit normalen Tintenstrahldruckern erfolgen kann, eignet sich dieses Verfahren auch für den Heimwerkerbereich.

In diesem Fall wird der flüssige Kunststoff für die Bildaufnahmeschicht von der Haftschicht selbst erbracht. Die Zusammensetzung der Haftschicht ist abhängig von der Unterlage, auf die diese aufgeschmolzen werden soll.
Eine geeignete Haftschicht ist eine Schicht aus Cellulose-2-acetat (60% Gewichtsanteile), Polymethylmethacrylat (PMMA, 39,5% Gewichtsanteile) und anionischen Tensiden (0,5% Gewichtsanteile) wie in Beispiel 6.
Eine andere geeignete Haftschicht ist eine Schicht aus Methylcellulose (40% Gewichtsanteil) und Kunststoffpulver (PP, PE, PVC, andere mit einer Partikelgröße von ca. 50 µm, 60% Gewichtsanteil), siehe Beispiel 9. Die Auswahl der Kunststoffpulverkomponente richtet sich nach der Verträglichkeit mit der jeweiligen Unterlage. Zusätzliche Additive für die jeweilige Haftschicht können weiße oder andere Farbpigmente sein.
Die Trägerfolie für die Haftschicht sollte gute haptische Eigenschaften besitzen. Außerdem ist es hilfreich, die Folien fein zu perforieren, damit es beim Aufbügeln nicht zu Blasenbildung zwischen Folie und Gegenstand kommt.
Nach dem Bedrucken der Haftschicht und dem Trocknen des Bildes wird die Folie mit dem Bild zum Gegenstand hingewandt aufgebügelt. Dabei werden die Kunststoffbestandteile in der Haftschicht geschmolzen und gehen eine Schmelzverbindung mit dem Untergrund ein. Die Trägerfolie fungiert danach als Schutzschicht für das Bild.

### Beispiel 16:

Fixierung von Bildern in Textilien:
Die Fixierung von Bildern in Textilien kann auf zwei verschiedenen Wegen erfolgen:
   1) Die Textilfasern (soweit es sich um Kunstfasern handelt) werden partiell aufgeschmolzen (chemisch oder durch Hitze) und nehmen die bereits bedruckte Haftschicht in sich auf, stellen also selbst die Bildaufnahmeschicht dar.
   2) Eine Haftschicht wird auf das Gewebe aufgebracht (bei Naturfasern und bei Kunstfasern möglich). Diese wird bedruckt und anschließend mit dem flüssigen Kunststoff in Kontakt gebracht, der die Bildaufnahmeschicht bildet.

Am häufigsten verwendete Kunstfasern sind Vertreter der Polyacryle, Polyamide, Polyester, Polyolefine, Polyurethane, Polychloride, Elastane, Silicone, aber auch vieler anderer Polymere.
Gewebe aus Kunststofasern können sowohl aus solchen gleichen Typs oder auch aus Kombinationen verschiedener Kunstfasern hergestellt werden. Auch die Verwendung von Kunstfasern aus Copolymeren ist möglich. Stoffe können auch als Laminate hergestellt werden und bestehen dann aus verschiedenen Stoffschichten. Eine weitere Variante sind künstliche und natürliche Stoffe, die auf ihrer Oberfläche eine Beschichtung aus einem Polymer aufweisen.

Naturfasern bestehen aus pflanzlichen Fasern (Zellulose - Leinen, Jute, Hanf, Sisal) und tierischen Fasern (Proteinen - Wolle, Lama, Alpaka, Mohair, Kaschmir, Seide). Viele Stoffe sind Fasergemische von Zellulosefasern untereinander, Proteinfasern untereinander oder von Zellulose- und Proteinfasern. Sehr viele Gewebe bestehen aus Mischungen zwischen Natur- und Kunstfasern.
1)Das aus Polymerfasern bestehende Kunstfasergewebe muss zunächst oberflächlich zumindest teilweise geschmolzen werden. Abhängig vom Polymertyp kann dies entweder durch Erhitzung erfolgen oder durch den Einsatz von Säuren bzw. Laugen oder durch die Behandlung mit Lösungsmitteln, welche durch Aufsprühen auf das Kunststoffgewebe oder durch andere Techniken aufgebracht werden. Auch die Aufbringung von Säuren bzw. Laugen oder von Lösungsmitteln auf die Haftschicht und ein anschließender Kontakt mit der Oberfläche des Kunststoffgewebes ist möglich. Die Wahl der Methode zur Verflüssigung des Kunststoffes bei Kunststoffmischgeweben ist abhängig vom Faserhauptbestandteil des Kunststoffgewebes. Vorher, danach oder währenddessen wird die für das Polymer spezifische bildtragende Haftschicht mit der Oberfläche des Kunststoffgewebes in Kontakt gebracht. Der teilweise verflüssigte Kunststoff geht mit der Haftschicht eine Verbindung ein. Das Polymer der Kunstfaser erhärtet abhängig vom Kunststofftyp durch Abkühlung, durch Verdunstung des Lösemittels oder durch die Neutralisierung der Säure oder der Lauge. Das Bild ist in der Kunstfaser eingebettet.
   stellvertretendes Beispiel: Die überwiegende Faser des Gewebes besteht aus Polymethylmethacrylat (PMMA). Die Haftschicht besteht aus Cellulose-2-acetat (60% Gewichtsanteile), Polymethylmethacrylat (PMMA, 39,5% Gewichtsanteile) und anionischen Tensiden (0,5% Gewichtsanteile) wie in Beispiel 6. Das Kunstfasergewebe wird durch Aufsprühen von Aceton oberflächlich aufgelöst, die bebilderte Haftschicht wird unter leichtem Druck auf das Kunstfasergewebe aufgebracht und mit der Faser verschmolzen. (Hierbei wird sowohl das Gewebe als auch die Haftschicht gelöst.) Das Aceton dampft ab, die Faser mit dem Bild geht in den festen Zustand über. Fakultativ kann anschließend eine Schutzschicht (z.B. aus PMMA) aufgesprüht werden.
2)Auf die Fasern des Gewebes (nahezu alle Gewebe behandelbar) wird eine Haftschicht aufgebracht. Die Fasern des Gewebes dienen dabei als Unterlage. Diese wird bedruckt und anschließend wird ein flüssiger Kunststoff aufgebracht, der sich mit der bebilderten Haftschicht verbindet und die Bildaufnahmeschicht bildet.
   stellvertretendes Beispiel: Auf ein Mischgewebe wird eine Haftschicht aus Gelatine aufgebracht. Dazu wird eine wässrige Gelatinelösung (Gelatine 100% Trockengewichtsanteile) auf das Gewebe aufgesprüht und mit Formaldehyd fixiert. Nach dem Trocknen ist die Haftschicht bedruckbar.
   Nach dem Bedrucken des Werkstoffs wird ein dünner Polyurethanfilm, der die Bildaufnahmeschicht darstellt, auf die Haftschicht aufgetragen.

### Beispielhafte Zusammensetzungen der Haftschichten nach Gewichtsanteilen:

### Beispiel 17:

Als Haftschicht dient eine reine Cellulose-2-acetat-Schicht. Die Gewichtsanteile betragen 100%. Das Cellulose-2-acetatwird zunächst in Aceton vollständig gelöst und dann durch Aufsprühen auf eine Trägerfolie (beispielsweise aus PVC) aufgebracht. Sobald die Acetonschicht abgedampft ist, entsteht ein Film aus Cellulose-2-acetat, der dehnbar und thermoplastisch verformbar ist. Die Haftschicht ist bedruckbar. Die so entstandene Haftschicht sollte nicht dünner als 10 Mycrometer sein, da sonst die hydrophilen Eigenschaften für wasselösliche Tinten/Farben nicht stark genug sind. Gleichzeitig ist Cellulose-2-acetat in der Lage, stabile Verbindungen mit anderen Kunststoffen einzugehen. Diese Haftschicht eignet sich besonders zur Anwendung bei thermoplastischen Polymeren.

### Beispiel 18:

Als Haftschicht dient eine reine Schicht aus Polyethylenoxid, welches zunächst in Wasser gelöst wird (Gewichtsanteile 100%). Nach dem Auftrag durch Sprühen auf eine Trägerfolie muss das Wasser Abdampfen. Danach ist die Haftschicht bedruckbar. Gleichzeitig können sie thermoplastische Verbindungen zu anderen Kunststoffpolymeren eingehen und sind thermoplastisch verformbar. Sie eignen sich aber auch für den Einsatz bei Polyurethanen, Epoxidharzen und Polyestern.

### Beispiel 19:

Als Haftschicht dient eine Schicht aus PMMA (hydrophobe Komponente, 40% Gewichtsanteil) und Cellulose-2-acetat (60% Gewichtsanteil) als hydrophile Komponente, die sich aber mit thermoplastischen Polymeren verbinden kann. Beide Komponenten werden in Aceton gelöst und durch Sprühen auf eine Trägerfolie aufgebracht. Nach dem Abdampfendes Acetons liegt ein Copolymerisatfilm bestehend aus PMMA und Cellulose-2-acetat vor, der thermoplastisch verformbar ist und gute Verbindungen zu vielen Thermoplasten eingeht.

### Beispiel 20:

Als Haftschicht dient eine Copolymerisat-Schicht aus einem Gelatinederivat und Polyurethan. Verarbeitung der Gelatine mit Polyurethanen durch Polymerisation von Polyisocyanaten mit gelatinehaltigen Polyolen. Die Gewichtsanteile der Gelatine liegen bei 60%, die des Polyurethans bei 40%. Diese Haftschicht ist nach dem Auspolymerisieren bedruckbar mit wasserlöslichen Tinen/Farben. Sie eignet sich besonders für die Verarbeitung mit Polyurethanen.

### Beispiel 21:

Als Haftschicht dient ein Gelatineelastomer, welches durch die Behandlung von Gelatine (60% Gewichtsanteile) mit einer Säure oder einer Base und nachfolgender Behandlung mit Dimethylsulfat und Kresol entsteht. Diesem gummiartigen Polymer wird Polyglycerin (5%) zugesetzt und mit Butadienarylnitrilgummi (35%) gemischt.
Diese Haftschicht besitzt hydrophile Eigenschaften, ist stark elastisch und findet Anwendung bei der Verarbeitung von Elastomeren.

### Beispiel 22:

Mögliche Verarbeitungsschritte zur Herstellung der Haftschichten aus einer oder aus verschiedenen Komponenten (auch mit unterschiedlichen physikalischen Eigenschaften):
a. Die Komponenten werden im gleichen Lösungsmittel gelöst z.B. Wasser: Carboxymethylmehtylcellulose und Polyacrylamid oder Polyethylenoxid z.B. Aceton: Cellulose-2-Acetat und Polyacryl- und Polymethacrylsäureester oder Polyvinylacetat
b. Eine Komponente wird in einem Lösungsmittel gelöst, die zweite Komponente wird als Pulver eingebracht
   z.B. Carboxymethylmehtylcellulose wird in Wasser gelöst, PMMA oder andere Thermoplaste werden als Pulver (unlöslich) eingebracht (bevorzugte Pulvergröße zw. 50-150 mycrometer, andere Größen möglich)
c. Verschiedene Lösungsmittel (in denen Komponenten gelöst wurden) können untereinander gemischt werden
   z.B. Mischungen von Aceton, Ethanol, Methanol, Wasser untereinander sind möglich. Eine Reihe von Thermoplasten benötigt eher unoplare (in Wasser und polaren organischen Lösungsmitteln nicht lösliche) organische Lösungsmittel
d. Das oder die feinen Pulver einer oder verschiedener Komponenten werden auf dem Träger als Plastisol aufgebracht (Mischung aus pulverförmigen thermoplastischem Polymer und Weichmacher sowie gegebenenfalls Füllstoffen, Treibmittel und Additiven). Beim Erhitzen löst sich das Polymer im Weichmacher und bildet einen Film von hochviskoser Konsistenz, der bei Raumtemperatur nicht mehr fließfähig ist. Das Plastisol kann auch ohne Träger hergestellt werden, beispielsweise können die Komponenten zunächst ausgerakelt und dann als Folie eingeschmolzen werden.
e. Die Komponenten werden gemeinsam eingeschmolzen und als Schmelze auf den Träger aufgetragen durch Sprühen, Extrudieren oder ähnliches.
f. Die Komponenten werden als Dispersion aufgetragen.

## Patentansprüche

1. Verfahren zur Fixierung von Bildern in Kunststoffformkörpern nach dem Erzeugen eines Bildes auf einer Haftschicht,
**dadurch gekennzeichnet, dass**
auf das auf der Haftschicht mit oder ohne zusätzlichem Träger erzeugte Bild eine Bildaufnahmeschicht aus flüssigem Kunststoff aufgetragen wird, wobei Bestandteile der Haftschicht mindestens teilweise beim Auftragen des flüssigen Kunststoffes mit diesem mischbar sind, und anschließend die flüssige Kunststoffphase in eine feste Kunststoffphase überführt wird.

2. Verfahren nach Anspruch 1,
**dadurch gekennzeichnet, dass**
auf das auf der Haftschicht erzeugte Bild die Bildaufnahmeschicht aus flüssigem Kunststoff aufgetragen und nach einer Einwirkzeit von mindestens einer Sekunde diese flüssige Kunststoffphase in eine feste Kunststoffphase überführt wird.

3. Verfahren nach Anspruch 1 oder 2,
**dadurch gekennzeichnet, dass**
eine Kunststoffschmelze aufgetragen wird.

4. Verfahren nach Anspruch 1 oder 2,
**dadurch gekennzeichnet, dass**
ein flüssiger härtbarer Kunststoff aufgetragen wird.

5. Verfahren nach einem der Ansprüche 1 bis 4,
**dadurch gekennzeichnet, dass**
ein flüssiger Kunststoff aufgetragen wird, der ein Lösungsmittel oder ein Lösungsmittelgemisch enthält.

6. Verfahren nach einem der Ansprüche 1 bis 5,
**dadurch gekennzeichnet, dass**
ein flüssiger Kunststoff aufgetragen wird, der hydrophile oder hydrophobe Lösungsmittel enthält.

7. Verfahren nach einem der Ansprüche 1 bis 6,
**dadurch gekennzeichnet, dass**
ein zusätzlicher Träger der Haftschicht nach der Überführung der Bildaufnahmeschicht in die feste Kunststoffphase entfernt wird.

8. Verfahren nach einem der Ansprüche 1 bis 7,
**dadurch gekennzeichnet, dass**
ein Volumen an flüssigem Kunststoff aufgetragen wird, das wenigstens so groß wie das Volumen der Haftschicht.

9. Verfahren nach einem der Ansprüche 1 bis 8,
**dadurch gekennzeichnet, dass**
nach dem Entfernen des Trägers an seiner Stelle eine Grundschicht aus Kunststoff aufgetragen wird.

10. Verfahren nach Anspruch 9,
**dadurch gekennzeichnet, dass**
die Grundschicht als flüssige Kunststoffphase aufgetragen wird.

11. Verfahren nach Anspruch 9,
**dadurch gekennzeichnet, dass**
die Grundschicht als feste Kunststoffphase aufgetragen wird.

12. Verfahren nach einem der Ansprüche 1 bis 11,
**dadurch gekennzeichnet, dass**
eine Zusammensetzung der Haftschicht ausgewählt wird, die mit dem flüssigen Kunststoff der Bildaufnahmeschicht in molekulare Wechselwirkungen tritt.

13. Verfahren nach einem der Ansprüche 1 bis 12,
**dadurch gekennzeichnet, dass**
eine Haftschicht eingesetzt wird, die mindestens einen Bestandteil enthält, der in der flüssigen Kunststoffphase wenigstens teilweise lösbar ist und/oder eine chemische Reaktion mit dem Kunststoff eingeht.

14. Verfahren nach einem der Ansprüche 1 bis 13,
**dadurch gekennzeichnet, dass**
handelsübliche Polyesterfolien mit einer haftvermittelnden Schicht verwendet werden.

15. Verfahren nach einem der Ansprüche 1 bis 14,
**dadurch gekennzeichnet, dass**
flüssige duroplastische, thermoplastische und elastomere Kunststoffe oder Kunststoffmischungen aufgetragen werden, die nach dem Übergang in die feste Kunststoffphase transparente, nichttransparente, transluzente oder opake optische Eigenschaften aufweisen und/oder eingefärbt sind.

16. Verfahren nach einem der Ansprüche 1 bis 15,
**dadurch gekennzeichnet, dass**
Polyurethane eingesetzt werden.

17. Verfahren nach einem der Ansprüche 1 bis 15,
**dadurch gekennzeichnet, dass**
eine Mischung aus Polyurethan und Siliconen eingesetzt wird.

18. Verfahren nach einem der Ansprüche 1 bis 15,
**dadurch gekennzeichnet, dass**
Epoxide und Polyester eingesetzt werden.

19. Verfahren nach einem der Ansprüche 1 bis 15,
**dadurch gekennzeichnet, dass**
wässrige Polymerdispersionen eingesetzt werden.

20. Verfahren nach einem der Ansprüche 1 bis 15,
**dadurch gekennzeichnet, dass**
Polycarbonate eingesetzt werden.

21. Verfahren nach einem der Ansprüche 1 bis 15,
**dadurch gekennzeichnet, dass**
Polyethylen, Polypropylen oder Polystyren oder andere Polyalkylene eingesetzt werden.

22. Verfahren nach einem der Ansprüche 1 bis 15,
**dadurch gekennzeichnet, dass**
Polymere aus der Gruppe der Acrylverbindungen eingesetzt werden.

23. Verfahren nach einem der Ansprüche 1 bis 8 oder 12 bis 22, sofern sich
letztere nicht auf die Ansprüche 9 bis 11 beziehen,
**dadurch gekennzeichnet, dass**
der Träger nicht entfernt wird und damit als Grundschicht fungiert.

24. Verfahren nach einem der Ansprüche 1 bis 23,
**dadurch gekennzeichnet, dass**
die Bildaufnahmeschicht als fester Kunststoff auf das auf einer Haftschicht erzeugte Bild aufgetragen und dann mindestens teilsweise in die flüssige Phase gebracht wird.

25. Verfahren nach Anspruch 1 oder 24,
**dadurch gekennzeichnet, dass**
ein durch Erhitzen schmelzbarer Kunststoff verwendet wird.

26. Verfahren nach einem der Ansprüche 1, 24 und 25,
**dadurch gekennzeichnet, dass**
der feste Kunststoff als Folie auf die Haftschicht laminiert oder extrudiert wird.

27. Verfahren zur Fixierung von Digitalbildern in Kunststoffformkörpern nach dem Erzeugen eines Digitalbildes mittels Digitaldruck auf einem eine haftvermittelnde Schicht aufweisenden Träger,
**dadurch gekennzeichnet, dass**
auf das auf einer Haftschicht erzeugte Digitalbild eine Bildaufnahmeschicht aus flüssigem Kunststoff aufgetragen wird, wobei Bestandteile der Haftschicht mindestens teilweise beim Auftragen des flüssigen Kunststoffes mit diesem mischbar sind, und nach einer Einwirkzeit von mindestens einer Sekunde diese flüssige Kunststoffphase in eine feste Kunststoffphase überführt wird.

## Claims

1. Method for fixing images in plastic moldings after generating an image on an adhesive layer,
**characterized in that**
an image receptor layer of liquid plastic is applied to the image which, with or without an additional carrier, has been generated on the adhesive layer, and components of the adhesive layer are at least partially miscible with the liquid plastic when it is applied, and the liquid plastic phase is then converted to a solid plastic phase.

2. Method according to Claim 1,
**characterized in that**
the image receptor layer of liquid plastic is applied to the image generated on the adhesive layer, and after a contact time of at least one second this liquid plastic phase is converted to a solid plastic phase.

3. Method according to Claim 1 or 2,
**characterized in that**
a plastic melt is applied.

4. Method according to Claim 1 or 2,
**characterized in that**
a liquid, curable plastic is applied.

5. Method according to one of Claims 1 through 4,
**characterized in that**
a liquid plastic containing a solvent or solvent mixture is applied.

6. Method according to one of Claims 1 through 5,
**characterized in that**
a liquid plastic containing hydrophilic or hydrophobic solvents is applied.

7. Method according to one of Claims 1 through 6,
**characterized in that**
an additional carrier of the adhesive layer is removed after the image receptor layer is converted to the solid plastic phase.

8. Method according to or Claims 1 through 7,
**characterized in that**
a volume of liquid plastic is applied which is at least as great as the volume of the adhesive layer.

9. Method according to one of Claims 1 through 8,
**characterized in that**
after removal of the carrier a base layer of plastic is applied in its place.

10. Method according to Claim 9,
**characterized in that**
the base layer is applied as a liquid plastic phase.

11. Method according to Claim 9,
**characterized in that**
the base layer is applied as a solid plastic phase.

12. Method according to one of Claims 1 through 11,
**characterized in that**
a composition of the adhesive layer is selected which enters into molecular interactions with the liquid plastic of the image receptor layer.

13. Method according to one of Claims 1 through 12,
**characterized in that**
an adhesive layer is used which contains at least one component which is at least partially soluble in the liquid plastic phase and/or enters into a chemical reaction with the plastic.

14. Method according to one of Claims 1 through 13,
**characterized in that**
commercially available polyester films having a bonding layer are used.

15. Method according to one of Claims 1 through 14,
**characterized in that**
liquid duroplastic, thermoplastic, and elastomeric plastics or plastic mixtures are applied which after the conversion to the solid plastic phase have transparent, nontransparent, translucent, or opaque optical characteristics and/or are colored.

16. Method according to one of Claims 1 through 15,
**characterized in that**
polyurethanes are used.

17. Method according to one of Claims 1 through 15,
**characterized in that**
a mixture of polyurethane and silicones is used.

18. Method according to one of Claims 1 through 15,
**characterized in that**
epoxides and polyester are used.

19. Method according to one of Claims 1 through 15,
**characterized in that**
aqueous polymer dispersions are used.

20. Method according to one of Claims 1 through 15,
**characterized in that**
polycarbonates are used.

21. Method according to one of Claims 1 through 15,
**characterized in that**
polyethylene, polypropylene, or polystyrene, or other polyalkylenes are used.

22. Method according to one of Claims 1 through 15,
**characterized in that**
polymers from the group of acrylic compounds are used.

23. Method according to one of Claims 1 through 8 or 12 through 22, provided that the latter do not refer to claims 9 to 11,
**characterized in that**
the carrier is not removed, and thus acts as a base layer.

24. Method according to one of Claims 1 through 23,
**characterized in that**
the image receptor layer is applied as solid plastic to the image generated on an adhesive layer, and is then at least partially brought into the liquid phase.

25. Method according to Claim 1 or 24,
**characterized in that**
a plastic which may be melted by heating is used.

26. Method according to one of Claims 1, 24 and 25,
**characterized in that**
the solid plastic is laminated or extruded onto the adhesive layer as a film.

27. Method for fixing digital images in plastic moldings after a digital image is generated by digital printing on a carrier having a bonding layer,
**characterized in that**
an image receptor layer of liquid plastic is applied to a digital image generated on an adhesive layer, and after a contact time of at least one second this liquid plastic phase is converted to a solid plastic phase, wherein components of the adhesive layer are at least partially miscible with the liquid plastic when it is applied.

## Revendications

1. Procédé de fixation d'images dans des corps moulés en matière synthétique après la production d'une image sur une couche adhésive,
**caractérisé en ce**
**qu'**une couche de réception d'image en matière synthétique liquide est appliquée sur l'image produite sur la couche adhésive avec ou sans support supplémentaire, des composants de la couche adhésive pouvant être mélangés au moins partiellement avec la matière synthétique liquide lors de l'application de cette dernière, et la phase de matière synthétique liquide étant ensuite transformée en une phase de matière synthétique solide.

2. Procédé selon la revendication 1,
**caractérisé en ce que**
la couche de réception d'image en matière synthétique liquide est appliquée sur l'image produite sur la couche adhésive et ensuite, après un temps d'action d'au moins une seconde, cette phase de matière synthétique liquide est transformée en une phase de matière synthétique solide.

3. Procédé selon la revendication 1 ou 2,
**caractérisé en ce**
**qu'**une masse fondue de matière synthétique est appliquée.

4. Procédé selon la revendication 1 ou 2,
**caractérisé en ce**
**qu'**une matière synthétique durcissable liquide est appliquée.

5. Procédé selon une des revendications 1 à 4,
**caractérisé en ce**
**qu'**une matière synthétique liquide qui contient un solvant ou un mélange de solvants est appliquée.

6. Procédé selon une des revendications 1 à 5,
**caractérisé en ce**
**qu'**une matière synthétique liquide qui contient des solvants hydrophiles ou hydrophobes est appliquée.

7. Procédé selon une des revendications 1 à 6,
**caractérisé en ce**
**qu'**un support supplémentaire de la couche adhésive est enlevé après la transformation de la couche de réception d'image en phase de matière synthétique solide.

8. Procédé selon une des revendications 1 à 7,
**caractérisé en ce**
**qu'**il est appliqué un volume de matière synthétique liquide qui est au moins aussi grand que le volume de la couche adhésive.

9. Procédé selon une des revendications 1 à 8,
**caractérisé en ce que**,
après l'enlèvement du support, une couche de fond en matière synthétique est appliquée à sa place.

10. Procédé selon la revendication 9,
**caractérisé en ce que**
la couche de fond est appliquée en tant que phase de matière synthétique liquide.

11. Procédé selon la revendication 9,
**caractérisé en ce que**
la couche de fond est appliquée en tant que phase de matière synthétique solide.

12. Procédé selon une des revendications 1 à 11,
**caractérisé en ce**
**qu'**il est sélectionné une composition de la couche adhésive qui entre en interactions moléculaires avec la matière synthétique liquide de la couche de réception d'image.

13. Procédé selon une des revendications 1 à 12,
**caractérisé en ce**
**qu'**il est utilisé une couche adhésive qui contient au moins un composant qui est soluble au moins partiellement dans la phase de matière synthétique liquide et/ou qui entre en réaction chimique avec la matière synthétique.

14. Procédé selon une des revendications 1 à 13,
**caractérisé en ce que**
des films en polyester du commerce avec une couche promotrice d'adhérence sont utilisés.

15. Procédé selon une des revendications 1 à 14,
**caractérisé en ce que**
des matières synthétiques ou mélanges de matières synthétiques élastomères, thermoplastiques, duroplastiques liquides sont appliqués qui, après la transition vers la phase de matière synthétique solide, présentent des propriétés optiques transparentes, non transparentes, translucides ou opaques et/ou qui sont teintés.

16. Procédé selon une des revendications 1 à 15,
**caractérisé en ce que**
des polyuréthanes sont utilisés.

17. Procédé selon une des revendications 1 à 15,
**caractérisé en ce**
**qu'**un mélange de polyuréthane et de silicones est utilisé.

18. Procédé selon une des revendications 1 à 15,
**caractérisé en ce que**
des époxydes et des polyesters sont utilisés.

19. Procédé selon une des revendications 1 à 15,
**caractérisé en ce que**
des dispersions de polymères aqueuses sont utilisées.

20. Procédé selon une des revendications 1 à 15,
**caractérisé en ce que**
des polycarbonates sont utilisés.

21. Procédé selon une des revendications 1 à 15,
**caractérisé en ce que**
du polyéthylène, du polypropylène ou du polystyrène ou d'autres polyalkylènes sont utilisés.

22. Procédé selon une des revendications 1 à 15,
**caractérisé en ce que**
des polymères issus du groupe des composés acryliques sont utilisés.

23. Procédé selon une des revendications 1 à 8 ou 12 à 22 dans la mesure où ces dernières ne se réfèrent pas aux revendications 9 à 11,
**caractérisé en ce que**
le support n'est pas enlevé et fonctionne donc comme couche de fond.

24. Procédé selon une des revendications 1 à 23,
**caractérisé en ce que**
la couche de réception d'image est appliquée en tant que matière synthétique solide sur l'image produite sur une couche adhésive et est ensuite amenée au moins partiellement dans la phase liquide.

25. Procédé selon la revendication 1 ou 24,
**caractérisé en ce**
**qu'**une matière synthétique fusible par échauffement est utilisé.

26. Procédé selon une des revendications 1, 24 et 25,
**caractérisé en ce que**
la matière synthétique solide est laminée ou extrudée en tant que film sur la couche adhésive.

27. Procédé de fixation d'images numériques dans des corps moulés en matière synthétique après la production d'une image numérique au moyen d'une impression numérique sur un support présentant une couche promotrice d'adhérence,
**caractérisé en ce**
**qu'**une couche de réception d'image en matière synthétique liquide est appliquée sur l'image numérique produite sur une couche adhésive, des composants de la couche adhésive pouvant être mélangés au moins partiellement avec la matière synthétique liquide lors de l'application de celle-ci, et en ce que cette phase de matière synthétique liquide est transformée en une phase de matière synthétique solide après un temps d'action d'au moins une seconde.
